(19) Europäisches Patentamt
European Patent Office
Office européen des brevets

(11) **EP 4 239 784 A2**

(12) **EUROPEAN PATENT APPLICATION**
published in accordance with Art. 153(4) EPC

(43) Date of publication:
**06.09.2023 Bulletin 2023/36**

(21) Application number: **22742840.6**

(22) Date of filing: **19.01.2022**

(51) International Patent Classification (IPC):
*H01M 50/583* (2021.01)   *H01M 50/538* (2021.01)
*H01M 50/586* (2021.01)   *H01M 50/533* (2021.01)
*H01M 10/04* (2006.01)   *H01M 50/593* (2021.01)
*H01M 50/107* (2021.01)   *H01M 50/167* (2021.01)

(52) Cooperative Patent Classification (CPC):
H01M 10/0431; H01M 50/107; H01M 50/152;
H01M 50/167; H01M 50/179; H01M 50/184;
H01M 50/186; H01M 50/188; H01M 50/534;
H01M 50/536; H01M 50/538; H01M 50/545;
H01M 50/586; H01M 50/593; H01M 50/213; (Cont.)

(86) International application number:
**PCT/KR2022/001012**

(87) International publication number:
**WO 2022/158864 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 19.01.2021   KR 20210007278
19.02.2021   KR 20210022894
19.02.2021   KR 20210022897
19.02.2021   KR 20210022881
19.02.2021   KR 20210022891
23.02.2021   KR 20210024424
08.03.2021   KR 20210030291
08.03.2021   KR 20210030300
09.04.2021   KR 20210046798
04.05.2021   KR 20210058183
14.06.2021   KR 20210077046
28.06.2021   KR 20210084326
01.10.2021   KR 20210131208
01.10.2021   KR 20210131215
01.10.2021   KR 20210131225
01.10.2021   KR 20210131205
01.10.2021   KR 20210131207
14.10.2021   KR 20210137001
15.10.2021   KR 20210137856
22.10.2021   KR 20210142196
09.11.2021   KR 20210153472
19.11.2021   KR 20210160823

24.11.2021   KR 20210163809
26.11.2021   KR 20210165866
03.12.2021   KR 20210172446
10.12.2021   KR 20210177091
31.12.2021   KR 20210194610
31.12.2021   KR 20210194611
31.12.2021   KR 20210194612
31.12.2021   KR 20210194572
31.12.2021   KR 20210194593
05.01.2022   KR 20220001802

(71) Applicant: **LG Energy Solution, Ltd.**
**Seoul 07335 (KR)**

(72) Inventors:
• **MIN, Geon-Woo**
**Daejeon 34122 (KR)**
• **JO, Min-Ki**
**Daejeon 34122 (KR)**
• **KIM, Do-Gyun**
**Daejeon 34122 (KR)**
• **KIM, Jae-Woong**
**Daejeon 34122 (KR)**
• **HWANGBO, Kwang-Su**
**Daejeon 34122 (KR)**
• **PARK, Jong-Sik**
**Daejeon 34122 (KR)**
• **LIM, Jae-Won**
**Daejeon 34122 (KR)**
• **CHOE, Yu-Sung**
**Daejeon 34122 (KR)**

• **KIM, Hak-Kyun**
**Daejeon 34122 (KR)**

EP 4 239 784 A2

- **LEE, Je-Jun**
  **Daejeon 34122 (KR)**
- **LEE, Byoung-Gu**
  **Daejeon 34122 (KR)**
- **RYU, Duk-Hyun**
  **Daejeon 34122 (KR)**
- **LEE, Kwan-Hee**
  **Daejeon 34122 (KR)**
- **LEE, Jae-Eun**
  **Daejeon 34122 (KR)**
- **LIM, Hae-Jin**
  **Daejeon 34122 (KR)**
- **CHOI, Su-Ji**
  **Daejeon 34122 (KR)**
- **KANG, Bo-Hyun**
  **Daejeon 34122 (KR)**
- **JUNG, Ji-Min**
  **Daejeon 34122 (KR)**
- **KONG, Jin-Hak**
  **Daejeon 34122 (KR)**
- **LEE, Soon-O**
  **Daejeon 34122 (KR)**
- **CHOI, Kyu-Hyun**
  **Daejeon 34122 (KR)**
- **PARK, Pil-Kyu**
  **Daejeon 34122 (KR)**

(74) Representative: **Goddar, Heinz J.**
     **Boehmert & Boehmert**
     **Anwaltspartnerschaft mbB**
     **Pettenkoferstrasse 22**
     **80336 München (DE)**

(54) **ELECTRODE TERMINAL FIXING STRUCTURE, AND BATTERY, BATTERY PACK AND VEHICLE COMPRISING SAME**

(57)    Disclosed is a fixing structure of an electrode terminal, and a battery, a battery pack and a vehicle including the same. The fixing structure of an electrode terminal includes a battery housing configured to be opened at one side and have a bottom at the other side in which a perforation hole is formed; an electrode terminal installed through the perforation hole not to contact an inner wall of the perforation hole; and a terminal gasket interposed between the electrode terminal and the perforation hole, and the electrode terminal includes a body portion inserted into the perforation hole; an outer flange portion configured to extend along an outer surface of the bottom of the battery housing from a first side of the body portion; an inner flange portion configured to extend toward an inner surface of the bottom of the battery housing from a second side of the body portion; and a flat portion provided to an inner side of the inner flange portion.

FIG. 5

(52) Cooperative Patent Classification (CPC): (Cont.)
     H01M 50/249; H01M 50/503; H01M 2220/20;
     Y02E 60/10; Y02P 70/50

**Description**

TECHNICAL FIELD

The present disclosure relates to a fixing structure of an electrode terminal, and a battery, a battery pack and a vehicle including the same.

The present application claims priority to Korean Patent Application No. 10-2021-0007278 filed on January 19, 2021 in the Republic of Korea, Korean Patent Application No. 10-2021-0022897 filed on February 19, 2021 in the Republic of Korea, Korean Patent Application No. 10-2021-0022894 filed on February 19, 2021 in the Republic of Korea, Korean Patent Application No. 10-2021-0022891 filed on February 19, 2021 in the Republic of Korea, Korean Patent Application No. 10-2021-0022881 filed on February 19, 2021 in the Republic of Korea, Korean Patent Application No. 10-2021-0024424 filed on February 23, 2021 in the Republic of Korea, Korean Patent Application No. 10-2021-0030300 filed on March 8, 2021 in the Republic of Korea, Korean Patent Application No. 10-2021-0030291 filed on March 8, 2021 in the Republic of Korea, Korean Patent Application No. 10-2021-0046798 filed on April 9, 2021 in the Republic of Korea, Korean Patent Application No. 10-2021-0058183 filed on May 4, 2021 in the Republic of Korea, Korean Patent Application No. 10-2021-0077046 filed on June 14, 2021 in the Republic of Korea, Korean Patent Application No. 10-2021-0084326 filed on June 28, 2021 in the Republic of Korea, Korean Patent Application No. 10-2021-0131225 filed on October 1, 2021 in the Republic of Korea, Korean Patent Application No. 10-2021-0131215 filed on October 1, 2021 in the Republic of Korea, Korean Patent Application No. 10-2021-0131205 filed on October 1, 2021 in the Republic of Korea, Korean Patent Application No. 10-2021-0131208 filed on October 1, 2021 in the Republic of Korea, Korean Patent Application No. 10-2021-0131207 filed on October 1, 2021 in the Republic of Korea, Korean Patent Application No. 10-2021-0137001 filed on October 14, 2021 in the Republic of Korea, Korean Patent Application No. 10-2021-0137856 filed on October 15, 2021 in the Republic of Korea, Korean Patent Application No. 10-2021-0142196 filed on October 22, 2021 in the Republic of Korea, Korean Patent Application No. 10-2021-0153472 filed on November 9, 2021 in the Republic of Korea, Korean Patent Application No. 10-2021-0160823 filed on November 19, 2021 in the Republic of Korea, Korean Patent Application No. 10-2021-0163809 filed on November 24, 2021 in the Republic of Korea, Korean Patent Application No. 10-2021-0165866 filed on November 26, 2021 in the Republic of Korea, Korean Patent Application No. 10-2021-0172446 filed on December 3, 2021 in the Republic of Korea, Korean Patent Application No. 10-2021-0177091 filed on December 10, 2021 in the Republic of Korea, Korean Patent Application No. 10-2021-0194593 filed on December 31, 2021 in the Republic of Korea, Korean Patent Application No. 10-2021-0194610 filed on December 31, 2021 in the Republic of Korea, Korean Patent Application No. 10-2021-0194572 filed on December 31, 2021 in the Republic of Korea, Korean Patent Application No. 10-2021-0194612 filed on December 31, 2021 in the Republic of Korea, Korean Patent Application No. 10-2021-0194611 filed on December 31, 2021 in the Republic of Korea, and Korean Patent Application No. 10-2022-0001802 filed on January 5, 2022 in the Republic of Korea, the disclosures of which are incorporated herein by reference.

BACKGROUND ART

Secondary batteries that are easily applicable to various product groups and have electrical characteristics such as high energy density are universally applied not only to portable devices but also to electric vehicles (EVs), hybrid electric vehicles (HEVs) or the like driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery has an operating voltage of about 2.5V to 4.5V. Therefore, when a higher output voltage is required, a battery pack is configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing together with an electrolyte to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing.

However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation due to a small cross section area of the strip-shaped electrode tab.

For small cylindrical batteries with a form factor of 1865 (diameter: 16 mm, height: 65 mm) or 2170 (diameter: 21 mm, height: 70 mm), resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

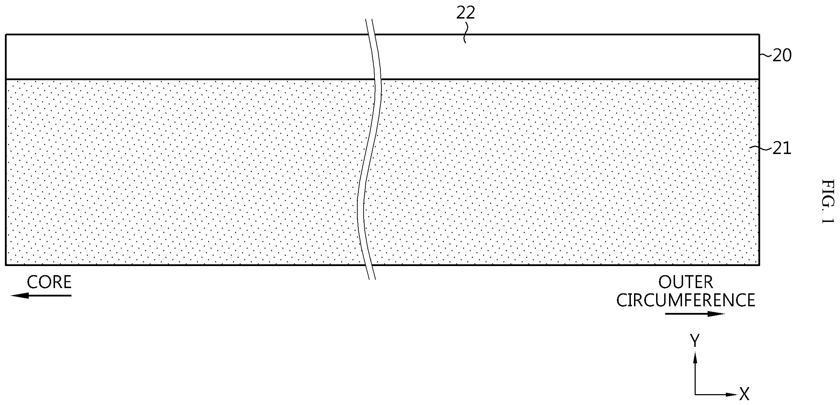

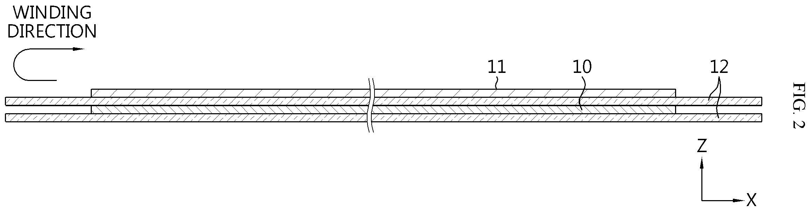

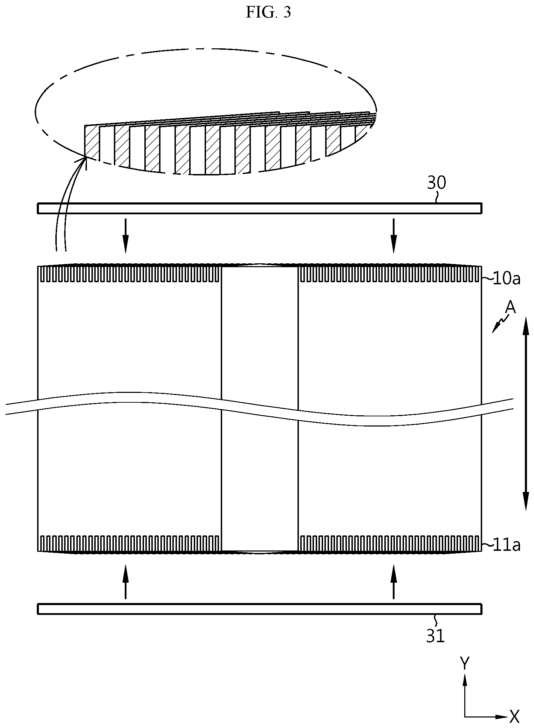

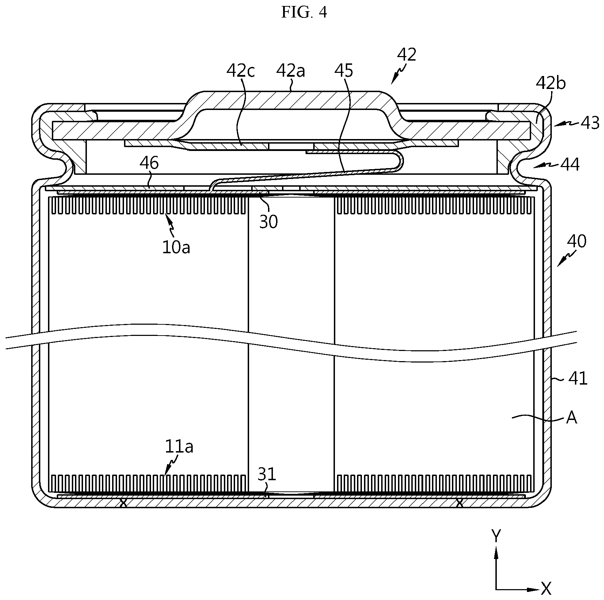

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collector to a bent surface of an uncoated portion. FIG. 4 is a sectional view showing the tab-less cylindrical battery, taken along a longitudinal direction (Y).

Referring to FIGS. 1 to 4, a positive electrode 10 and a negative electrode 11 have a structure in which a sheet-shaped current collector 20 is coated with an active material 21, and include an uncoated portion 22 at one long side along the winding direction X.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 and the negative electrode 11 are arranged in opposite directions.

After the winding process, the uncoated portion 10a of the positive electrode 10 and the uncoated portion 11a of the negative electrode 11 are bent toward the core. After that, current collectors 30, 31 are welded and coupled to the uncoated portions 10a, 11a, respectively.

An electrode tab is not separately coupled to the positive electrode uncoated portion 10a and the negative electrode uncoated portion 11a, the current collectors 30, 31 are connected to external electrode terminals, and a current path is formed with a large cross-sectional area along the winding axis direction of electrode assembly A (see an arrow in Fig. 3), which has an advantage of lowering the resistance of the battery. This is because resistance is inversely proportional to the cross-sectional area of the path through which the current flows.

However, when the form factor of the cylindrical battery increases and the magnitude of the charging current during rapid charging increases, the heat problem also occurs again in the tab-less cylindrical battery.

Specifically, the conventional tab-less cylindrical battery 40 includes a battery housing 41 and a sealing body 42 as shown in FIG. 4. The battery housing 41 is also called a battery can. The sealing body 42 includes a cap 42a, a sealing gasket 42b and a connection plate 42c. The sealing gasket 42b surrounds the edge of the cap 42a and is fixed by a crimping portion 43. In addition, the electrode assembly A is fixed in the battery housing 41 by a beading portion 44 to prevent vertical movement.

Typically, the positive electrode terminal is the cap 42a of the sealing body 42, and the negative electrode terminal is the battery housing 41. Accordingly, the current collector 30 coupled to the uncoated portion 10a of the positive electrode 10 is electrically connected to the connection plate 42c attached to the cap 42a through a lead 45 in the form of a strip. In addition, the current collector 31 coupled to the uncoated portion 11a of the negative electrode 11 is electrically connected to the bottom of the battery housing 41. An insulator 46 covers the current collector 30 to prevent the battery housing 41 and the uncoated portion 10a of the positive electrode 10 having different polarities from contacting each other and causing a short circuit.

When the current collector 30 is connected to the connection plate 42c, the lead 45 in the form of a strip is used. The lead 45 is separately attached to the current collector 30 or is manufactured integrally with the current collector 30. However, since the lead 45 is in the form of a thin strip, its cross-sectional area is small, and thus a lot of heat is generated when the rapid charging current flows. In addition, the excessive heat generated from the lead 45 is transferred to the electrode assembly A to shrink the separator 12, which may cause an inner short circuit that is a main cause of thermal runaway.

The lead 45 also occupies a significant installation space within the battery housing 41. Therefore, the cylindrical battery 40 including the lead 45 has low space efficiency, so there is a limit in increasing the energy density.

In addition, the top of the crimping portion 43 has a negative polarity but has a small area. In the drawings, the crimping portion 43 is illustrated large, but in fact, the top of the crimping portion 43 has a very smaller area than the sealing body 42. Thus, in order to stably connect bus bar components, the positive electrode should be connected to the sealing body 42 crimped to the open end of the battery housing 40, and the negative electrode should be connected to the bottom of the battery housing 40.

As above, in order to connect the conventional tab-less cylindrical batteries 40 in series and/or in parallel, it is necessary to connect a bus bar component to the cap 42a of the sealing body 42 and the bottom surface of the battery housing 41, which deteriorates the space efficiency. A battery pack mounted on an electric vehicle includes hundreds of cylindrical batteries 40. Therefore, the inefficiency of the electrical wiring causes considerable inconvenience in the assembly process of the electric vehicle and the maintenance of the battery pack.

## DISCLOSURE

## Technical Problem

The present disclosure is designed to solve the problems of the related art, and therefore the present disclosure is directed to lowering the inner resistance of a cylindrical battery and increasing the energy density by improving an electrode terminal structure of the cylindrical battery to increase the space efficiency in a battery housing.

The present disclosure is also directed to improving the electrode terminal structure of a cylindrical battery to solve the internal heating problem caused during rapid charging by expanding the cross-sectional area of a current path.

The present disclosure is also directed to providing a cylindrical battery having an improved structure that allows electrical wiring for serial and/or parallel connection of the cylindrical batteries to be performed at one side of the cylindrical batteries.

The present disclosure is also directed to providing a battery pack manufactured using the cylindrical battery with an improved structure and a vehicle including the battery pack.

However, the technical objects to be solved by the present disclosure are not limited to the above, and other objects not mentioned herein will be clearly understood by those skilled in the art from the following disclosure.

## Technical Solution

In one aspect of the present disclosure, there is provided a fixing structure of an electrode terminal, comprising: a battery housing configured to be opened at one side and have a bottom at the other side in which a perforation hole is formed; an electrode terminal installed through the perforation hole not to contact an inner wall of the perforation hole; and a terminal gasket interposed between the electrode terminal and the perforation hole, wherein the electrode terminal includes: a body portion inserted into the perforation hole; an outer flange portion configured to extend along an outer surface of the bottom of the battery housing from a first side of the body portion; an inner flange portion configured to extend toward an inner surface of the bottom of the battery housing from a second side of the body portion; and a flat portion provided to an inner side of the inner flange portion.

Preferably, the flat portion may be parallel with the inner surface of the bottom of the battery housing.

Preferably, the electrode terminal may be made of metal, and the inner flange portion is formed by plastically processing the second side of the body portion.

In an embodiment, the electrode terminal may be a rivet terminal riveted through the perforation hole by the inner flange portion.

In another embodiment, an angle between a surface of the inner flange portion facing the bottom of the battery housing and the inner surface of the bottom of the battery housing may be 0° to 60°.

In still another embodiment, the inner flange portion may include a first region gradually spaced away from the bottom of the battery housing and a second region connected to the first region and extending toward the bottom of the battery housing, and an angle between a surface of the second region facing the bottom and the inner surface of the bottom may be 0° to 30°.

Preferably, a recess may be provided between the inner flange portion and the flat portion.

In an embodiment, the recess may be a groove having a closed loop shape recessed toward a central axis of the body portion.

In another embodiment, the recess may have an asymmetric cross section.

In still another embodiment, the asymmetric cross section may include a sidewall of the flat portion and an inclined surface of the inner flange portion connected to an end of the sidewall of the flat portion.

In still another embodiment, the sidewall may be perpendicular to the inner surface of the bottom of the battery housing.

In still another embodiment, the sidewall may be inclined toward the flat portion.

Preferably, the inner flange portion may have a thickness gradually decreasing as being farther away from the body portion.

Preferably, the terminal gasket may include an outer gasket interposed between the outer flange portion and a first plane where the outer surface of the bottom of the battery housing is located; an inner gasket interposed between the inner flange portion and a second plane where the inner surface of the bottom of the battery housing is located; and an intermediate gasket interposed between the body portion and the perforation hole to connect the outer gasket and the inner gasket.

In an embodiment, the intermediate gasket may have different thicknesses depending on locations thereof.

In another embodiment, the terminal gasket may have a minimum thickness in the intermediate gasket.

In still another embodiment, a region of the intermediate gasket adjacent to the first plane may have a thickness increasing as being closer to the first plane.

In still another embodiment, a region of the intermediate gasket adjacent to the second plane may have a thickness increasing as being closer to the second plane.

In still another embodiment, a central region located between the first plane and the second plane of the intermediate gasket may have a uniform thickness.

In still another embodiment, a region of the intermediate gasket interposed between an inner edge of the perforation hole connected to the inner surface of the bottom and the inner flange portion may have a relatively smaller thickness than the other region of the intermediate gasket.

In still another embodiment, the intermediate gasket may have a thickness gradually decreasing as being farther away from the outer flange portion.

In still another embodiment, a region of the inner gasket interposed between the inner surface of the bottom and a region near an end of the inner flange portion may have a smallest thickness.

In still another embodiment, the inner edge of the perforation hole may include a facing surface that faces the inner flange portion.

In still another embodiment, the inner gasket may be configured to extend longer than the inner flange portion so that an end thereof is exposed.

In still another embodiment, a height of the flat portion may be equal to or larger than a height of an end of the inner gasket based on the inner surface of the bottom of the battery housing.

In still another embodiment, a height of the flat portion may be equal to or larger than a height of the inner flange portion based on the inner surface of the bottom of the battery housing.

In still another embodiment, a height of the inner flange portion may be larger than a height of an end of the inner gasket based on the inner surface of the bottom of the battery housing.

Preferably, a height of the inner flange portion may be 0.5 mm to 3.0 mm based on the inner surface of the bottom of the battery housing.

Preferably, a height of the electrode terminal extending from a lower surface of the outer flange portion to a surface of the flat portion may be 4 mm to 7 mm.

Preferably, a height of the outer flange portion may be 0.8 mm or more based on the outer surface of the bottom of the battery housing.

Preferably, at least a portion of the outer gasket may be exposed to the outside of the outer flange portion, and the exposed portion of the outer gasket, when measured in a direction parallel to the outer surface of the bottom of the battery housing, may have a width of 0.1 mm to 1 mm.

Preferably, a radius from a center of the body portion to an edge of the outer flange portion may be 10% to 70% of a radius of the bottom of the battery housing.

Preferably, a radius from a center of the body portion to an edge of the flat portion may be 4% to 30% of a radius of the bottom of the battery housing.

Preferably, when a ratio of a thickness change at a maximum compression point compared to a thickness before compression of the terminal gasket is defined as a compression ratio, the compression ratio of the terminal gasket may be 30% to 90%.

More preferably, the terminal gasket may include polybutylene terephthalate, polyethylene fluoride, or polypropylene, and the compression ratio of the terminal gasket may be 50% to 90%.

Preferably, the intermediate gasket and the inner gasket of the terminal gasket may have substantially the same thickness before compression, and the compression ratio of the intermediate gasket and the inner gasket may be 50% to 90%.

In another aspect of the present disclosure, there is also provided a battery, comprising: an electrode assembly in which a first electrode and a second electrode are wound with a separator interposed therebetween, the electrode assembly having a first portion of the first electrode and a second portion of the second electrode configured to extend from both ends thereof and exposed to the outside of the separator; a battery housing configured to accommodate the electrode assembly and electrically connected to the first electrode; an electrode terminal installed through a perforation hole formed in a bottom of the battery housing not to contact an inner wall of the perforation hole and electrically connected to the second electrode; the electrode terminal including: a body portion inserted into the perforation hole; an outer flange portion configured to extend along an outer surface of the bottom of the battery housing from a first side of the body portion; an inner flange portion configured to extend toward an inner surface of the bottom of the battery housing from a second side of the body portion; and a flat portion provided to an inner side of the inner flange portion, a terminal gasket interposed between the electrode terminal and the perforation hole; and a sealing body configured to seal an open end of the battery housing so as to be insulated from the battery housing.

In an embodiment, the battery housing may include a beading portion formed in a region adjacent to the open end and pressed-in into the battery housing, and the sealing body may include a cap having no polarity and a sealing gasket interposed between an edge of the cap and the open end of the battery housing.

In another embodiment, the battery housing may further include a crimping portion extended and bent into the inside of the battery housing and configured to surround and fix the edge of the cap together with the sealing gasket.

Preferably, the cap may include a vent notch that ruptures when a pressure inside the battery housing exceeds a threshold.

Preferably, the vent notch may be ruptured when the pressure inside the battery housing is in the range of 15 kgf/cm$^2$ to 35 kgf/cm$^2$.

In still another embodiment, the battery according to the present disclosure may further comprise a first current collector coupled to the first portion of the first electrode, and at least a part of an edge of the first current collector not in contact with the first portion of the first electrode may be interposed between the beading portion and the sealing gasket and fixed by the crimping portion.

Preferably, at least a part of the edge of the first current collector may be fixed to an inner circumference of the beading portion adjacent to the crimping portion by welding.

In still another embodiment, the battery according to the present disclosure may further comprise a second current collector coupled to the second portion of the second electrode, and at least a part of the second current collector may be coupled to the flat portion of the electrode terminal.

Preferably, the second current collector and the flat portion of the electrode terminal may be coupled through welding, and a tensile force of the welding portion between the second current collector and the flat portion of the electrode terminal may be 2 kgf or above.

Preferably, a converted diameter of the welding pattern exposed on a surface of the second current collector may be 2 mm or more.

Preferably, a diameter of the flat portion of the electrode terminal may be 3 mm to 14 mm.

Preferably, a ratio of an area of the welding pattern exposed on a surface of the second current collector to an area of the flat portion of the electrode terminal may be 2.04% to 44.4%.

In still another embodiment, the battery according to the present disclosure may further comprise an insulator interposed between the second current collector and an inner circumference of the bottom of the battery housing and between an inner circumference of a sidewall of the battery housing and the electrode assembly.

Preferably, the insulator may have a welding hole formed to expose the flat portion of the electrode terminal toward the second current collector and cover a surface of the second current collector and an edge of one side of the electrode assembly.

Preferably, a height from the inner surface of the bottom of the battery housing to the flat portion of the electrode terminal may be equal to or smaller than a thickness of the insulator.

Preferably, the terminal gasket may include an outer gasket interposed between the outer flange portion and a first plane where the outer surface of the bottom of the battery housing is located; an inner gasket interposed between the inner flange portion and a second plane where the inner surface of the bottom of the battery housing is located; and an intermediate gasket interposed between the body portion and the perforation hole to connect the outer gasket and the inner gasket.

Preferably, an end of the inner gasket may be exposed to the outside of the inner flange portion.

In still another embodiment, the welding hole may expose the flat portion of the electrode terminal and the inner flange portion.

In still another embodiment, the welding hole may expose the flat portion of the electrode terminal, the inner flange portion and the inner gasket.

In still another embodiment, in the battery according to the present disclosure, a first bus bar terminal may be electrically coupled to a surface of the electrode terminal, and a second bus bar terminal may be electrically coupled to the outer surface of the bottom of the battery housing.

Preferably, the first bus bar terminal may overlap with the electrode terminal on a plane to form a first overlapping region, and the second bus bar terminal may overlap with the outer surface of the bottom of the battery housing to form a second overlapping region, and a diameter of the electrode terminal and a width of the outer surface of the bottom of the battery housing may satisfy the following relational expression,

$$W_1 \leq E_1 \leq D\text{-}2R_d\text{-}2G\text{-}2W_2$$

$$E_2 = 0.5*(D\text{-}2R_d\text{-}2G\text{-}E_1)$$

($E_1$: diameter of the electrode terminal, $E_2$: width of an exposed surface parallel to a surface of the electrode terminal in the outer surface of the bottom of the battery housing, D: outer diameter of the battery housing, $R_d$: width of a round region at an edge of the battery housing measured on a plane, G: exposure width of the outer gasket through an edge of the electrode terminal, $W_1$: maximum value among distances between any two points selected in an edge of the first overlapping region, $W_2$: maximum value among distances between two points where a plurality of linear lines passing through the center of the electrode terminal meet an edge of the second overlapping region).

In still another embodiment, a form factor ratio obtained by dividing a diameter of the battery by height may be greater than 0.4.

In another aspect of the present disclosure, there is also provided a battery pack comprising a plurality of batteries described above.

Preferably, the plurality of batteries may be arranged in a predetermined number of columns, and the electrode terminal and the outer surface of the bottom of the battery housing of each of the plurality of batteries may be disposed to face upward.

Preferably, the battery pack according to the present disclosure may comprise a plurality of bus bars configured to connect the plurality of batteries in series and in parallel, the plurality of bus bars may be disposed above the plurality of batteries, and each bus bar may include a body portion configured to extend between electrode terminals of adjacent batteries; a plurality of first bus bar terminals respectively configured to extend in one side direction from the body portion and electrically coupled to the electrode terminal of the battery located in the one side direction; and a plurality of second bus bar terminals respectively configured to extend in the other side direction from the body portion and electrically coupled to the outer surface of the bottom of the battery housing of the battery located in the other side direction.

Preferably, an AC resistance of the battery measured between the electrode terminal and the outer surface of the bottom of the battery housing may be 4 milliohms (mohm) or less.

In another aspect of the present disclosure, there is also provided a vehicle comprising the battery pack described above.

Advantageous Effects

According to an embodiment of the present disclosure, it is possible to lower the inner resistance of a battery and increase the energy density by improving an electrode terminal structure of the battery to increase the space efficiency in a battery housing.

According to another embodiment of the present disclosure, it is possible to solve the internal heating problem caused during rapid charging by improving the electrode terminal structure of a battery to expand the cross-sectional area of a current path.

According to still another embodiment of the present disclosure, electrical wiring for serial and/or parallel connection of the batteries may be performed at one side of the batteries.

According to still another embodiment of the present disclosure, it is possible to provide a battery pack manufactured using the battery with an improved structure and a vehicle including the battery pack.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a plan view showing a structure of an electrode used for a conventional tab-less cylindrical battery.
FIG. 2 is a diagram showing a process of winding an electrode assembly included in the conventional tabless cylindrical battery.
FIG. 3 is a diagram showing a process of welding a current collector to a bent surface of an uncoated portion in the electrode assembly of FIG. 2.
FIG. 4 is a sectional view showing the conventional tab-less cylindrical battery, taken along a longitudinal direction (Y).

FIG. 5 is a sectional view showing a fixing structure of an electrode terminal according to an embodiment of the present disclosure.
FIG. 6a is an enlarged sectional view showing a portion indicated by a dotted circle in FIG. 5.
FIG. 6b is a partially enlarged sectional view showing a fixing structure of an electrode terminal according to another embodiment of the present disclosure.
FIG. 6c is a plan view schematically showing a welding pattern formed on a flat portion of the electrode terminal according to an embodiment of the present disclosure.
FIG. 7a is a sectional view showing a cylindrical battery according to an embodiment of the present disclosure, taken along a longitudinal direction (Y).
FIG. 7b is a sectional view showing a cylindrical battery according to another embodiment of the present disclosure, taken along a longitudinal direction (Y).
FIG. 8 is a plan view exemplarily showing an electrode structure according to a preferred embodiment of the present disclosure.
FIG. 9 is a sectional view showing an electrode assembly in which a segment structure of an uncoated portion of the electrode according to an embodiment of the present disclosure is applied to a first electrode and a second electrode, taken along the longitudinal direction (Y).
FIG. 10a is a sectional view showing an electrode assembly in which the uncoated portion is bent according to an embodiment of the present disclosure, taken along the longitudinal direction (Y).
FIG. 10b is a perspective view showing the electrode assembly in which the uncoated portion is bent according to an embodiment of the present disclosure.
FIG. 11 is a top plan view showing that a plurality of cylindrical batteries according to an embodiment of the present disclosure are connected in series and in parallel using a bus bar.
FIG. 12a is a partially enlarged view of FIG. 11.
FIGS. 12b and 12c are diagrams exemplarily showing parameters used in defining a diameter of the electrode terminal and an exposure width of an outer surface of a bottom of a battery housing according to an embodiment of the present disclosure.
FIG. 13 is a diagram showing a schematic configuration of a battery pack including the cylindrical batteries according to an embodiment of the present disclosure.
FIG. 14 is a diagram showing a schematic configuration of a vehicle including the battery pack according to an embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help understanding of the invention, in the accompanying drawings, some components may not be drawn to scale, but their dimensions may be exaggerated. Also, the same reference numbers may be assigned to the same components in different embodiments.

When it is explained that two objects are identical, this means that these objects are 'substantially identical'. Accordingly, the substantially identical objects may include deviations considered low in the art, for example, deviations within 5%. Also, when it is explained that certain parameters are uniform in a predetermined region, this may mean that the parameters are uniform in terms of an average.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

For convenience of description, a direction that goes along a lengthwise direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radial direction. Among them, in particular, the direction that gets closer to the winding axis is referred to as a centripetal direction, and the direction that faces away from the winding axis is referred to as a centrifugal direction.

A cylindrical battery according to an embodiment of the present disclosure may include an electrode terminal installed in a perforation hole formed in a bottom of a battery housing.

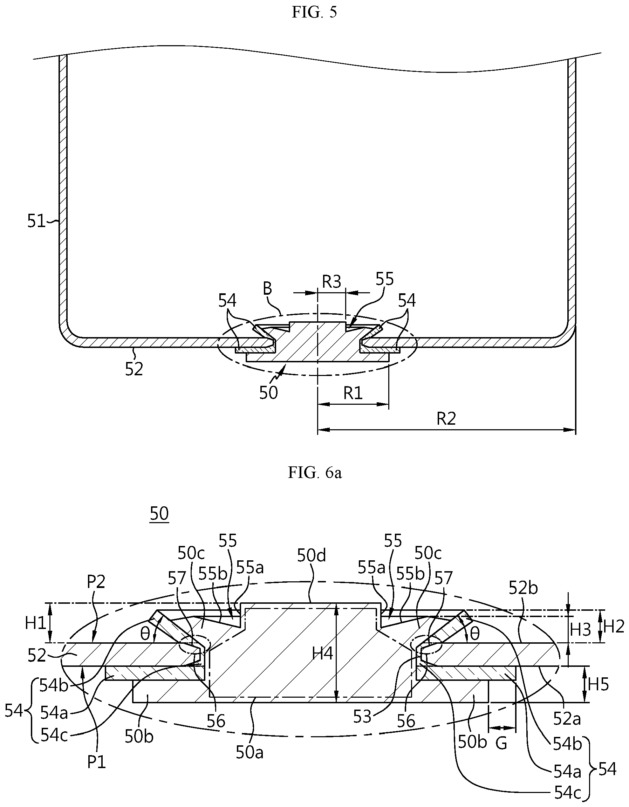

FIG. 5 is a sectional view showing a fixing structure of an electrode terminal 50 according to an embodiment of the present disclosure, and FIG. 6a is an enlarged sectional view showing a portion indicated by a dotted circle in FIG. 5.

Referring to FIGS. 5 and 6a, the electrode terminal 50 may include a body portion 50a having an upper surface, a lower surface and an outer surface, an outer flange portion 50b extending from an outer surface of the body portion 50a along an outer surface 52a of the bottom 52 of the battery housing 51, and an inner flange portion 50c extending from the outer surface of the body portion 50a toward an inner surface 52b of the bottom 52 of the battery housing 51. The upper surface of the body portion 50a is flat and may be connected to a current collector, and is located above the inner flange portion 50c.

The fixing structure of the electrode terminal 50 according to the embodiment of the present disclosure may be applied to a structure of a cylindrical battery housing 51. Specifically, the fixing structure of the electrode terminal 50 may include a battery housing 51 having one open side, an electrode terminal 50 fixed through a perforation hole 53 formed in the bottom 52 of the battery housing 51, and a terminal gasket 54 interposed between the electrode terminal 50 and the perforation hole 53.

The battery housing 51 may include a cylindrical sidewall and a bottom 52 connected to an end of the sidewall. Since the perforation hole 53 is formed in the bottom 52, the battery housing 51 has a structure in which one side is opened and the other side is partially closed by the bottom 52. The battery housing 51 may have shapes other than the cylindrical shape, for example, a rectangular shape with a rectangular cross section.

The battery housing 51 is made of a conductive metal material. In one example, the battery housing 51 may be made of a steel, an aluminum, stainless steel or the like, but the present disclosure is not limited thereto. The inner and outer surfaces of the battery housing 51 may be coated with a Ni plating layer.

The electrode terminal 50 is made of a conductive metal material. In one example, the electrode terminal 50 may be made of a steel, an aluminum, stainless steel or the like, but the present disclosure is not limited thereto. The electrode terminal 50 may be made of 10 series aluminum alloy, which is easy for plastic processing and has low resistance. The plastic processing is a method of deforming a metal into a desired shape by applying a physical force thereto, and may include riveting, caulking, and the like.

The terminal gasket 54 may be made of a polymer resin having insulation and elasticity. In one example, the terminal gasket 54 may be made of polypropylene, polybutylene terephthalate, polyethylene fluoride, or the like, but the present disclosure is not limited thereto.

Preferably, the electrode terminal 50 is installed in the perforation hole 53 not to contact an inner wall of the perforation hole 53.

The electrode terminal 50 may include a body portion 50a inserted into the perforation hole 53. The body portion 50a may include an upper surface, a lower surface, and an outer surface connecting the upper and lower surfaces. Also, the body portion 50a may include an outer flange portion 50b extending along an outer surface 52a from the circumference of a first side of the body portion 50a exposed through the outer surface 52a of the bottom 52 of the battery housing 51, an inner flange portion 50c extending toward an inner surface 52b from the circumference of a second side of the body portion 50a exposed through the inner surface 52b of the bottom 52 of the battery housing 51, and a flat portion 50d provided to an inner side of the inner flange portion 50c and surrounded by the inner flange portion 50c.

Preferably, the flat portion 50d corresponds to the upper surface of the body portion 50a. The flat portion 50d and the inner surface 52b of the bottom 52 of the battery housing 51 may be parallel to each other. Here, the term 'parallel' means substantially parallel when observed with the naked eye. The flat portion 50d may be a surface that is formed in advance before the electrode terminal 50 is plastically processed. That is, the flat portion 50d may be a region that is not deformed by plastic processing.

Preferably, the electrode terminal 50 is made of metal, and the inner flange portion 50c may be formed by plastically processing an upper periphery of the body portion 50a. The plastic processing may be caulking. However, the present disclosure is not limited thereto. In one embodiment, the electrode terminal 50 may be a rivet terminal riveted through the perforation hole 53 by the inner flange portion 50c.

The inner flange portion 50c extends in a direction gradually away from the bottom 52 of the battery housing 51. The angle (θ) between the surface of the inner flange portion 50c facing the bottom 52 of the battery housing 51 and the inner surface 52b of the bottom 52 of the battery housing 51 may be 0° to 60°.

The size of the angle (θ) is determined by the caulking strength when the electrode terminal 50 is installed in the perforation hole 53 of the battery housing 51 by a caulking method. In one example, as the caulking strength increases, the angle (θ) may decrease to 0°. If the angle (θ) exceeds 60°, the sealing effect of the terminal gasket 54 may be deteriorated.

Meanwhile, since the outer flange portion 50b is substantially parallel to the bottom 52 of the battery housing 51, the angle between the inner flange portion 50c and the outer flange portion 50b may also be 0° to 60°.

According to another embodiment, a recess 55 may be provided between the inner flange portion 50c and the flat portion 50d. The recess 55 is a groove recessed toward a central axis of the body portion 50a. The groove may have a closed loop shape when viewed from the central axis of the body portion 50a. The recess 55 may have an asymmetric cross section. In one example, the asymmetric cross section may have an approximately V or U shape. The asymmetric cross section may include a sidewall 55a of the flat portion 50d and an inclined surface 55b connected to an end of the sidewall 55a and formed by the upper surface of the inner flange portion 50c. The outer surface of the body portion 50a exposed through the sidewall 55a may be called a first surface, and the inclined surface 55b may be called a second surface. The first surface and the second surface are asymmetric to each other. The sidewall 55a may be substantially perpendicular to the inner surface 52b of the bottom 52 of the battery housing 51. The term 'vertical' means substantially vertical when observed with the naked eye. As will be explained later, the sidewall 55a may be inclined toward the flat portion 50d. The recess 55 is formed by the shape of a caulking jig when the electrode terminal 50 is installed in the perforation hole 53 of the battery housing 51 in a caulking method.

Preferably, the thickness of the inner flange portion 50c may gradually decrease as being farther away from the body portion 50a of the electrode terminal 50.

According to another embodiment, the terminal gasket 54 may include an outer gasket 54a interposed between the outer flange portion 50b and a first plane P1 where the outer surface 52a of the bottom 52 of the battery housing 51 is located, an inner gasket 54b interposed between the inner flange portion 50c and a second plane P2 where the inner surface 52b of the bottom 52 of the battery housing 51 is located, and an intermediate gasket 54c interposed between the body portion 50a and the perforation hole 53 and connecting the outer gasket 54a and the inner gasket 54b.

The outer gasket 54a and/or the inner gasket 54b and/or the intermediate gasket 54c may have different thicknesses depending on their locations.

Preferably, the intermediate gasket 54c may have different thicknesses depending on its location, and the terminal gasket 54 may have a minimum thickness in the intermediate gasket 54c.

In one aspect, the region of the intermediate gasket 54c adjacent to the first plane P1 may have a thickness increasing as being closer to the first plane P1. Similarly, the region of the intermediate gasket 54c adjacent to the second plane P2 may have a thickness increasing as being closer to the second plane P2. Also, the central region of the intermediate gasket 54c positioned between the first plane P1 and the second plane P2 may have a uniform thickness.

Preferably, a region of the intermediate gasket 54c interposed between the inner flange portion 50c and an inner edge 56 of the perforation hole 53 connected to the inner surface 52b of the bottom 52 of the battery housing 51 may have a relatively smaller thickness. Preferably, a minimum thickness point may be present in the region of the intermediate gasket 54c interposed between the inner edge 56 of the perforation hole 53 and the inner flange portion 50c. In addition, the inner edge 56 of the perforation hole 53 may include a facing surface 57 that faces the inner flange portion 50c.

Meanwhile, the top and bottom of the inner wall of the perforation hole 53 perpendicular to the bottom 52 of the battery housing 51 are chamfered (corner-cut) to form a tapered surface toward the electrode terminal 50. However, the top and/or bottom of the inner wall of the perforation hole 53 may be transformed into a smooth curved surface with curvature. In this case, the stress applied to the gasket 54 near the top and/or bottom of the inner wall of the perforation hole 53 may be more relaxed.

Preferably, the inner gasket 54b may extend longer than the inner flange portion 50c while forming an angle ($\theta$) of 0° to 60° with the inner surface 52b of the bottom 52 of the battery housing 51.

In another embodiment, the height (H1) of the flat portion 50d based on the inner surface 52b of the bottom 52 of the battery housing 51 may be equal to or greater than the height (H2) of the end of the inner gasket 54b. In addition, the height (H1) of the flat portion 50d based on the inner surface 52b of the bottom 52 of the battery housing 51 may be equal to or greater than the height (H3) of the end of the inner flange portion 50c. Here, the height H2 is the maximum height of the end of the inner gasket 54b measured based on the inner surface 52b. In addition, the height H3 is the maximum height of the upper surface of the inner flange portion 50c measured based on the inner surface 52b.

If the height parameters H1, H2 and H3 satisfy the conditions, it is possible to prevent the inner flange portion 50c and the inner gasket 54b from interfering with other components.

Preferably, the height (H3) of the inner flange portion 50c may be 0.5 mm to 3.0 mm. If the height (H3) of the inner flange portion 50c is less than 0.5 mm, sufficient sealing properties are not ensured. In addition, if the height (H3) of the inner flange portion 50c exceeds 3 mm, the inner space of the battery housing 51 that can be occupied by the electrode assembly is reduced.

Preferably, the height (H4) of the electrode terminal 50 may be 1.5 mm to 7 mm. The height (H4) of the electrode terminal 50 corresponds to a distance from the lower surface of the outer flange portion 50b to the flat portion 50d. If the height (H4) of the electrode terminal 50 is less than 1.5 mm, it is difficult to increase the height of the inner flange portion 50c to the extent that sealing properties can be secured due to the thickness of the bottom 52 of the battery housing 51. For reference, the thickness of the battery housing 51 bottom 52 is about 0.5 mm to 1 mm. In addition, if the height (H4) of the electrode terminal 50 exceeds 7 mm, the inner space of the battery housing 51 that can be occupied by the electrode assembly decreases and the height of the battery increases, and thus the energy density per unit volume decreases as much. When H3 and H4 satisfy the above numerical ranges, it is possible to sufficiently secure the sealing properties of the electrode terminal 50 without reducing the space inside the battery housing 51.

In another embodiment, the height (H5) of the outer flange portion 50b may be 0.8 mm or more based on the outer surface 52a of the bottom 54 of the battery housing 51. If the height (H5) of the outer flange portion 50b is less than 0.8 mm, the outer flange portion 50b may be deformed when the electrode terminal 50 is riveted. The thickness of the outer gasket 54a is 0.3 mm or more in consideration of insulation and sealing properties. Considering the thickness of the outer gasket 54a, if the height of the outer flange portion 50b is less than 0.8mm, the outer flange portion 50b becomes thin to a level that is difficult to secure sufficient mechanical rigidity. In particular, it is more serious when the electrode terminal 50 is made of aluminum. Meanwhile, the height of the outer flange portion 50b may be appropriately set in consideration of the space margin of the upper part of the battery. In an example, the height of the outer flange portion 50b may be set to 2 mm or less, or 3 mm or less, or 4 mm or less, or 5 mm or less, but the present disclosure is not limited thereto.

In still another embodiment, at least a portion of the outer gasket 54a may be exposed to the outside of the outer flange portion 50b of the electrode terminal 50. The outer gasket 54a is in order to insulate the electrode terminal 50 and the outer surface 52a having the opposite polarity to the electrode terminal 50 from each other. For electrical insulation of the electrode terminal 50 and the outer surface 52a, the exposure width (G) of the outer gasket 54a may be 0.1 mm to 1 mm. If the exposure width (G) is smaller than 0.1 mm, the electrical insulation of the electrode terminal 50 and the outer surface 52a on a plane may be broken when high c-rate charge/discharge of 300A or more is performed. In addition, if the exposure width (G) exceeds 1 mm, the electrical insulation effect is not further increased, but rather the area of the outer surface 52a used as an area of the negative electrode is reduced, so the contact area of a component (e.g., a bus bar) used for electrical connection is reduced.

In still another embodiment, the diameter of the flat portion 50d of the electrode terminal 50 may be determined in consideration of welding strength between the current collector and the flat portion 50d. The tensile force of the welding portion between the flat portion 50d and the current collector may be at least 2 kgf or more, or 5 kgf or more, or 6 kgf or more, or 7 kgf or more, or 8 kgf or more, or 9 kgf or more, or 10 kgf or more. It is desirable to increase the tensile force of the welding portion as much as possible within an allowable range by selecting the welding method in a best way.

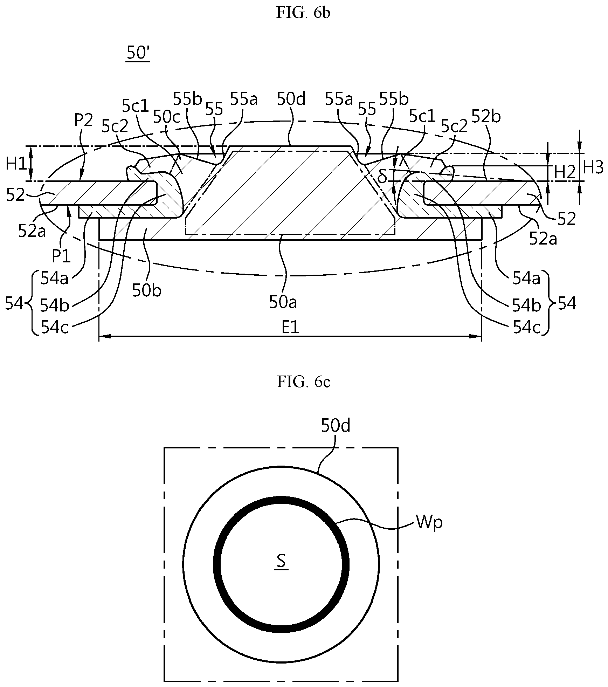

Referring to FIG. 6c, in order to satisfy the tensile force condition of the welding portion, the diameter of the welding pattern Wp formed on the flat portion 50d may be at least 2 mm. When the area (S) of the welding pattern Wp appearing on the surface of the welding portion is converted into an area ($\pi r^2$) of a circle, the diameter of the welding pattern Wp may be defined as a converted diameter ($2*(S/\pi)^{0.5}$) of the corresponding circle. The welding pattern Wp may be continuous or discontinuous. The welding pattern Wp may not be a circle. When the welding pattern Wp is not a circle, the converted diameter (maximum value*2) may be determined from the maximum value of the distance from the center of the flat portion 50d to the edge of the welding pattern Wp.

The flat portion 50d of the electrode terminal 50 corresponds to a weldable region. The diameter of the weldable region may be 3 mm and 14 mm. If the diameter of the weldable region is less than 3 mm, it is difficult to secure a welding pattern with a diameter of 2 mm or more. In particular, when forming the welding pattern using laser welding, it is difficult to secure a welding pattern having a diameter of 2 mm or more due to laser beam interference. If the diameter of the weldable region exceeds 14 mm, the diameter of the outer flange portion 50b of the electrode terminal 50 becomes too large, and thus it is difficult to sufficiently secure the area of the outer surface 52a of the battery housing bottom 52 to be used as the negative electrode region.

Considering the diameter condition of the welding pattern and the diameter condition of the weldable region, the ratio of the area of the welding pattern to the area of the weldable region required to secure a tensile force of the welding portion of at least 2 kgf or more is preferably 2.04% ($\pi 1^2/\pi 7^2$) to 44.4% ($\pi 1^2/\pi 1.5^2$).

In another embodiment, the radius (R1) from the center of the body portion 50a to the edge of the outer flange portion 50b may be 10 to 70% of the radius (R2) of the bottom 52 of the battery housing 51.

If R1 is small, when wiring a component (a bus bar) used for electric connection of the electrode terminal 50, the welding space is insufficient. In addition, if R1 is large, the welding space decreases when welding a component (a bus bar) for electric connection to the outer surface 52a of the bottom 52 of the battery housing 51 except for the electrode terminal 50.

If the ratio R1/R2 is adjusted between 10 and 70%, it is possible to properly secure the welding space for the electrode terminal 50 and the outer surface 52a of the bottom 52 of the battery housing 51.

In addition, the radius (R3) from the center of the body portion 50a of the electrode terminal 50 to the edge of the flat portion 50d may be 4% to 30% of the radius (R2) of the bottom 52 of the battery housing 51.

If R3 is small, the welding space becomes insufficient when welding a current collector to the flat portion 50d of the electrode terminal 50, and the welding area of the electrode terminal 50 decreases, thereby increasing the contact resistance. In addition, R3 must be smaller than R1, and if R3 becomes larger, the thickness of the inner flange portion 50c becomes thinner, and the strength of the inner flange portion 50c compressing the terminal gasket 54 becomes weak, which may deteriorating the sealing ability of the terminal gasket 54.

If R3/R2 is adjusted between 4% to 30%, the welding process may be easily performed by sufficiently securing the welding area between the flat portion 50d of the electrode terminal 50 and the current collector, and also it is possible to reduce the contact resistance of the welding region the and prevent the sealing ability of the terminal gasket 54 from deteriorating.

According to an embodiment of the present disclosure, the fixing structure of the electrode terminal 50 may be formed using a caulking jig that moves up and down. First, a preform (not shown) of the electrode terminal 50 is inserted into the perforation hole 53 formed in the bottom 52 of the battery housing 51 by interposing the terminal gasket 54. The preform refers to an electrode terminal before the caulking process is performed.

Next, the caulking jig is inserted into the inner space of battery housing 51. The caulking jig has a groove and a protrusion corresponding to the final shape of the electrode terminal 50 on the surface opposite the preform in order to form the electrode terminal 50 by press-forming the preform.

Next, the caulking jig is moved downward to perform press-forming to the upper portion of the preform, so that the preform is transformed into an electrode terminal 50 riveted to the perforation hole 53 of the battery housing 51.

The press-in depth of the caulking jig may be regulated by the flat portion 50d. The flat portion 50d is formed in advance in the body portion 50a, and the caulking jig has a groove into which the flat portion 50d is inserted. Therefore, while the preform is being press-formed, if the flat portion 50d comes into contact with the bottom of the groove, the press-forming is stopped. Accordingly, the inner flange portion 50c and the recess 55 formed through plastic deformation may have the uniform shape even in the mass production process. In addition, the flat portion 50d is not deformed or hardly deformed while the preform is being pressed by the caulking jig. Accordingly, the flat portion 50d may also maintain a uniform shape during mass production. This makes it easier to weld the flat portion 50d and the current collector, as explained later, and accordingly, the manufacturing deviation may be significantly reduced.

While the preform is pressed by the caulking jig to deform its shape, the outer gasket 54a interposed between the outer flange portion 50b and the outer surface 52a of the bottom 52 of the battery housing 51 is elastically compressed so that its thickness decreases. In addition, as the region of the intermediate gasket 54c interposed between the inner edge 56 of the perforation hole 53 and the preform is elastically compressed by the inner flange portion 50c, the thickness of the region is further reduced than other regions. In particular, the region where the thickness of the intermediate gasket 54c is intensively reduced is indicated by a dotted circle in FIG. 6a. Accordingly, the sealing and airtightness between the riveted electrode terminal 50 and the battery housing 51 are significantly improved.

Preferably, the terminal gasket 54 is compressed sufficiently to secure a desired sealing strength without being physically damaged in the process of riveting the preform through plastic processing, called caulking.

Preferably, the compression ratio of the terminal gasket 54 may be 30% to 90%. The minimum compression ratio (30%) corresponds to a compression ratio of a minimum level to ensure the sealing property of the electrode terminal 50. The maximum compression ratio (90%) corresponds to a compression ratio of a maximum level that can be achieved without physically damaging the terminal gasket 54.

In one example, when the terminal gasket 54 is made of polybutylene terephthalate, it is preferable that the terminal gasket 54 has a compression ratio of 50% or more at the point where the terminal gasket 54 is compressed to a minimum thickness.

In the present disclosure, the compression ratio may be defined as a ratio of the thickness change at a maximum compression point compared to the thickness before compression of the terminal gasket 54. The thickness of the inner gasket 54b and the intermediate gasket 54c before compression may be uniform, and a maximum compression point may exist near the inner edge 56. Preferably, the compression ratio may be calculated based on the uniform thickness of the inner gasket 54b and the intermediate gasket 54c.

In another example, when the terminal gasket 54 is made of polyfluoroethylene, it is preferable that the terminal gasket 54 has a compression ratio of 60% or more at the point where the terminal gasket 54 is compressed to a minimum thickness. Preferably, the compression ratio may be calculated based on the uniform thickness of the inner gasket 54b and the intermediate gasket 54c.

In still another example, when the terminal gasket 54 is made of polypropylene, it is preferable that the terminal gasket 54 has a compression ratio of 60% or more at the point where the terminal gasket 54 is compressed to a minimum thickness. Preferably, the compression ratio may be calculated based on the uniform thickness of the inner gasket 54b and the intermediate gasket 54c.

Preferably, press-forming may be performed in multiple stages to the upper portion of the preform by vertically moving the caulking jig at least two times. That is, the preform may be deformed several times by performing press-forming in multiple stages. At this time, the pressure applied to the caulking jig may be increased step by step. In this way, the stress applied to the preform is dispersed several times, thereby preventing the terminal gasket 54 from being damaged during the caulking process. In particular, when the region of the intermediate gasket 54c interposed between the inner edge 56 of the perforation hole 53 and the preform is intensively compressed by the inner flange portion 50c, the damage to the gasket is minimized by performing press-forming in multiple stages.

After the press-forming is completely performed to the preform using the caulking jig, if the caulking jig is separated from the battery housing 51, the fixing structure of the electrode terminal 50 according to an embodiment of the present disclosure may be obtained as shown in FIG. 6a.

According to the above embodiment, the caulking jig performs press-forming to the upper portion of the preform by vertical moving inside the battery housing 51. In some cases, a rotary jig used in the prior art may be used for performing press-forming to the preform.

However, the rotary jig rotates in a state of being inclined at a predetermined angle with respect to the central axis of the battery housing 51. Therefore, the rotary jig with a large rotation radius may interfere with the inner wall of the battery housing 51. In addition, if the battery housing 51 has a large depth, the length of the rotary jig is also increased. In this case, as the rotation radius of the end of the rotary jig increases, press-forming may not be performed properly to the preform. Therefore, it is more effective to perform press-forming using a caulking jig rather than using a rotary jig.

Meanwhile, the electrode terminal 50 may have various structures depending on the design of the preform and/or the caulking jig and/or the terminal gasket 54 and the magnitude of the pressure applied to the preform during the caulking process.

FIG. 6b is a partially enlarged sectional view showing the structure of an electrode terminals 50' according to another embodiment of the present disclosure.

Referring to FIG. 6b, the electrode terminal 50' according to another embodiment has a structure in which the inner flange portion 50c is riveted toward the inner surface 52b of the bottom 52 of the battery housing 51.

The inner flange portion 50c includes a first region 50c1 extending in a direction gradually away from the bottom 52 of the battery housing 51, and a second region 50c2 connected to the first region 50c1 and extending toward the bottom 52 of the battery housing 51.

The angle ($\delta$) between the surface of the second region 50c2 facing the bottom 52 of the battery housing 51 and the inner surface 52b of the bottom 52 may be 0° to 30°.

Preferably, the angle ($\delta$) may be substantially close to 0 (zero) in order to increase the sealing properties of the terminal gasket 54 to the maximum. Since the second region 50c2 strongly compresses the inner gasket 54b, it is possible to increase the sealing properties of the terminal gasket 54. This effect increases as the angle ($\delta$) is closer to 0.

The height (H3) of the inner flange portion 50c is greater than the height (H2) of the inner gasket 54b.

In addition, the inner edge of the perforation hole 53 has an arc shape with a predetermined curvature. Also, the sidewall 55a of the edge portion of the flat portion 50d has a structure inclined toward the flat portion 50d.

The terminal gasket 54 includes an outer gasket 54a interposed between the outer flange portion 50b and the first plane P1 where the outer surface 52a of the bottom 52 of the battery housing 51 is located; an inner gasket 54b interposed between the inner flange portion 50c and the second plane P2 where the inner surface 52b of the bottom 52 of the battery housing 51 is located; and an intermediate gasket 54c interposed between the body portion 50a and the perforation hole 53 to connect the outer gasket 54a and the inner gasket 54b.

Preferably, the thickness of the intermediate gasket 54c may gradually decrease as being farther away from the outer gasket 54a. Also, the thickness of the inner gasket 54b may decrease to the minimum thickness near the end of the inner flange portion 50c, and then slightly increase toward the uppermost end. The compression structure of this inner gasket 54b may further improve the sealing properties of the electrode terminal 50'. The compression ratio of the inner gasket 54b can be calculated at the minimum thickness point near the end of the inner flange portion 50c.

Preferably, the fixing structure of the electrode terminal 50, 50' according to the embodiments of the present disclosure described above may be applied to a cylindrical battery having a form factor greater than 2170.

Recently, as the cylindrical battery is applied to an electric vehicle, the form factor of the cylindrical battery is increasing compared to the conventional form factor of 1865, 2170, and the like. An increase in the form factor leads to an increase in energy density, an increase in safety against thermal runaway, and an improvement in cooling efficiency.

In addition, as will be explained later, electrical wiring may be performed at one side of the cylindrical battery to which the fixing structure of the electrode terminal 50, 50' is applied. In addition, the electrode terminal 50, 50' has a large sectional area and low resistance, so it is very suitable for rapid charging.

Preferably, the cylindrical battery to which the structure of the electrode terminal 50, 50' of the present disclosure is applied may have a form factor ratio (defined as a value obtained by dividing the diameter of the cylindrical battery by height, namely a ratio of diameter ($\Phi$) to height (H)) is greater than about 0.4.

Here, the form factor means a value indicating the diameter and height of a cylindrical battery. The form factor of the cylindrical battery according to an embodiment of the present disclosure may be, for example, 4611, 4875, 48110, 4880, or 4680. In the numerical value representing the form factor, first two digits indicate the diameter of the battery, the other digits indicate the height of the battery.

A battery according to an embodiment of the present disclosure may be a cylindrical battery, whose diameter is approximately 46 mm, height is approximately 110 mm, and form factor ratio is 0.418.

A battery according to another embodiment may be a cylindrical battery, whose diameter is about 48 mm, height is about 75 mm, and form factor ratio is 0.640.

A battery according to still another embodiment may be a cylindrical battery, whose diameter is approximately 48 mm, height is approximately 110 mm, and form factor ratio is 0.436.

A battery according to still another embodiment may be a cylindrical battery, whose diameter is approximately 48 mm, height is approximately 80 mm, and form factor ratio is 0.600.

A battery according to still another embodiment may be a cylindrical battery, whose diameter is approximately 46 mm, height is approximately 80 mm, and form factor ratio is 0.575.

Conventionally, batteries having a form factor ratio of about 0.4 or less have been used. That is, conventionally, for example, an 1865 battery, a 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

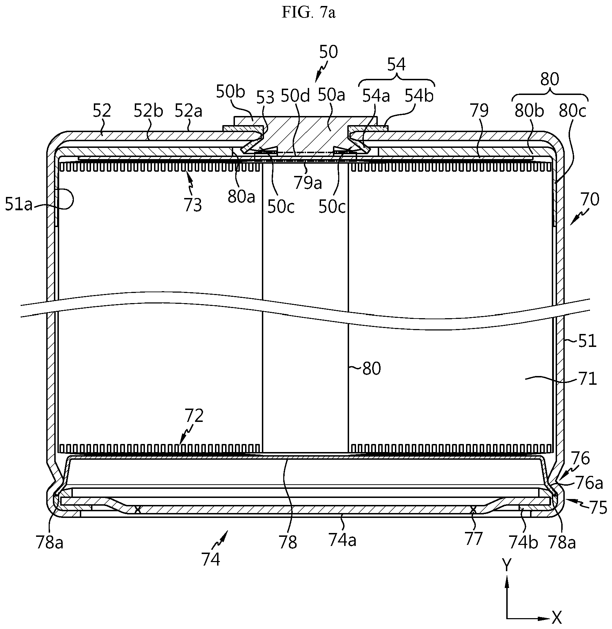

FIG. 7a is a sectional view showing a cylindrical battery 70 according to an embodiment of the present disclosure, taken along a longitudinal direction (Y).

Referring to FIG. 7a, the cylindrical battery 70 according to the embodiment includes a jelly-roll type electrode assembly 71 in which a first electrode and a second electrode having a sheet shape are wound with a separator interposed therebetween so that an uncoated portion 72 serving as a first portion of the first electrode is exposed at a lower portion and an uncoated portion 73 serving as a second portion of the second electrode is exposed at an upper portion.

Here, the first portion and the second portion may be other portions of the electrode than the uncoated portion. The other portion may be a metal tab electrically coupled to the uncoated portion of the electrode. In addition, it is not excluded that the electrode assembly 71 has a shape other than the jelly-roll shape. In addition, it is obvious that the battery may have not only a cylindrical shape but also other shapes such as a prismatic shape as well as a cylindrical shape.

In an embodiment, the first electrode may be a negative electrode and the second electrode may be a positive electrode, or vice versa.

The method of winding the electrode assembly 71 is substantially the same as the method of winding the electrode assembly used in manufacturing the conventional tab-less cylindrical battery described with reference to FIG. 2.

In depicting the electrode assembly 71, only the uncoated portions 72, 73 extending to be exposed to the outside of the separator are illustrated in detail, and the winding structure of the first electrode, the second electrode and the separator is not illustrated in detail.

The cylindrical battery 70 also includes a cylindrical battery housing 51 that accommodates the electrode assembly 71 and is electrically connected to the uncoated portion 72 of the first electrode.

Preferably, one side (lower portion) of the battery housing 51 is open. In addition, the bottom 52 of the battery housing 51 has a structure in which the electrode terminal 50 is riveted to the perforation hole 53 through a plastic process (for example, caulking).

Specifically, the electrode terminal 50 may include a body portion 50a inserted into the perforation hole 53, an outer flange portion 50b extending along the outer surface 52a from the circumference of the first side of the body portion 50a exposed through the outer surface 52a of the bottom 52 of the battery housing 51, an inner flange portion 50c extending toward the inner surface 52b from the circumference of the second side of the body portion 50a exposed through the inner surface 52b of the bottom 52 of the battery housing 51, and a flat portion 50d provided at an inner side of the inner flange portion 50c and surrounded by the inner flange portion 50c.

The electrode terminal 50 may be replaced with the electrode terminal 50' shown in FIG. 6b.

The cylindrical battery 70 may also include a terminal gasket 54 interposed between the electrode terminal 50 and the perforation hole 53.

The cylindrical battery 70 may also include a sealing body 74 that seals the open end of the battery housing 51 to be insulated from the battery housing 51. Preferably, the sealing body 74 may include a cap 74a having no polarity and having a plate shape, and a sealing gasket 74b interposed between an edge of the cap 74a and the open end of the battery housing 51.

The cap 74a may be made of a conductive metal material such as aluminum, steel, nickel or the like. In addition, the sealing gasket 74b may be made of polypropylene, polybutylene terephthalate, polyethylene fluoride, or the like having insulation and elasticity. However, the present disclosure is not limited by the materials of the cap 74a and the sealing gasket 74b.

The cap 74a may include a vent notch 77 that ruptures when the pressure inside the battery housing 51 exceeds a threshold. The vent notch 77 may be formed at both sides of the cap 74a. The vent notch 77 may form a continuous or discontinuous circular pattern, a straight pattern or any other pattern on the surface of the cap 74a. The depth and width of the vent notch 77 may be set such that the vent notch 77 is ruptured when the pressure inside the battery housing 51 is in the range of 15 kgf/cm$^2$ to 35 kgf/cm$^2$.

The battery housing 51 may include a crimping portion 75 that is extended and bent into the inside of the battery housing 51 to surround and fix the edge of the cap 74a together with the sealing gasket 74b in order to fix the sealing body 74 to the battery housing 51.

Preferably, the lower surface of the cap 74a may be located above the lower end of the crimping portion 75. Then, a vent space is formed below the cap 74a, so that when the vent notch 77 is ruptured, the gas can be smoothly discharged.

The battery housing 51 may also include a beading portion 76 pressed-in into the battery housing 51 in a region adjacent the open end thereof. The beading portion 76 supports the edge of the sealing body 74, particularly the outer circumferential surface of the sealing gasket 74b, when the sealing body 74 is fixed by the crimping portion 75.

The cylindrical battery 70 may further include a first current collector 78 welded to the uncoated portion 72 of the first electrode. The first current collector 78 is made of a conductive metal material such as aluminum, steel, nickel or the like. Preferably, at least a portion 78a of the edge of the first current collector 78 not in contact with the uncoated portion 72 of the first electrode may be interposed between the beading portion 76 and the sealing gasket 74b and fixed by the crimping portion 75. Optionally, at least a portion 78a of the edge of the first current collector 78 may be fixed to the inner circumference 76a of the beading portion 76 adjacent to the crimping portion 75 by a laser welding, a spot welding, an ultrasonic welding or the like.

The cylindrical battery 70 may also include a second current collector 79 that is welded to the uncoated portion 73 of the second electrode. Preferably, at least a portion of the second current collector 79, for example a central portion 79a thereof, may be welded to the flat portion 50d of the electrode terminal 50.

Preferably, when the second current collector 79 is welded, a welding tool may be inserted through the cavity 80 in the core of the electrode assembly 71 to reach a welding point of the second current collector 79. In addition, when the second current collector 79 is welded to the flat portion 50d of the electrode terminal 50, since the electrode terminal 50 supports the welding region of the second current collector 79, it is possible to improve the welding quality by applying a strong pressure to the welding region. In addition, since the flat portion 50d of the electrode terminal 50 has a large area, a wide welding region may also be secured. Accordingly, the contact resistance of the welding region is lowered, thereby lowering the inner resistance of the cylindrical battery 70. The face-to-face welding structure of the riveted electrode terminal 50 and the second current collector 79 is very useful for rapid charging using high C-rate current. This is because the current density per unit area may be lowered in the cross section in a direction in which the current flows and thus the amount of heat generated in the current path may be lowered than that of the prior art.

When welding the flat portion 50d of the electrode terminal 50 and the second current collector 79, any one of laser welding, ultrasonic welding, spot welding, and resistance welding may be used.

In one example, when the flat portion 50d and the second current collector 79 are laser-welded in a continuous or discontinuous line in the form of an arc pattern, the diameter of the arc welding pattern is 2 mm or more, preferably 4 mm or more. When the diameter of the arc welding pattern satisfies the corresponding conditions, it is possible to increase the tensile force of the welding portion to 2 kgf or above, thereby securing sufficient welding strength.

In another example, when the flat portion 50d and the second current collector 79 are ultrasonic-welded in a circular pattern, the diameter of the circular welding pattern is preferably 2 mm or more. When the diameter of the circular welding pattern satisfies the corresponding conditions, it is possible to increase the tensile force of the welding portion to 2 kgf or above, thereby securing sufficient welding strength.

The diameter of the flat portion 50d corresponding to the weldable region may be adjusted in the range of 3 mm to 14 mm. If the radius of the flat portion 50d is less than 3 mm, it is difficult to form a welding pattern with a diameter of 2 mm or more using a laser welding tool, an ultrasonic welding tool, or the like. In addition, if the radius of the flat portion 50d exceeds 14 mm, the size of the electrode terminal 50 becomes excessively large, and the area occupied by the outer surface 52a of the bottom 52 of the battery housing 51 is reduced, so that it is difficult to connect an electrical connection component (a bus bar) through the outer surface 52a.

Preferably, since the diameter of the welding pattern for securing the welding portion tensile force to 2 kgf or more is 2 mm or more and the diameter of the weldable region is 3 mm to 14 mm, the area ratio of the welding pattern to the area of the weldable region may be $2.04(100*\pi 1^2/\pi 7^2)\%$ to $44.4(100*1^2\pi 1^2/\pi 1.5^2)\%$.

The cylindrical battery 70 may further include an insulator 80. The insulator 80 may be interposed between the second current collector 79 and the inner surface 52b of the bottom 52 of the battery housing 51, and between the inner circumference 51a of the sidewall of the battery housing 51 and the electrode assembly 71.

Preferably, the insulator 80 may have a welding hole 80a that exposes the flat portion 50d of the electrode terminal 50 toward the second current collector 79. In addition, the welding hole 80a may expose the inner flange portion 50c and the inner gasket 54b together with the flat portion 50d of the electrode terminal.

Preferably, the insulator 80 may cover the surface of the second current collector 79 and one (upper) edge of the electrode assembly 71. By doing so, it is possible to prevent the second current collector 79 having a polarity different from that of the battery housing 51 from contacting the uncoated portion 73 of the second electrode.

Preferably, the insulator 80 is made of an insulating resin, and may include an upper plate 80b and a side sleeve 80c. In one example, the upper plate 80b and the side sleeve 80c may be integrally formed by injection molding. Alternatively, the side sleeve 80c may be replaced with an insulation tape or the like. The insulation tape may cover the outer edge of the second current collector 79 together with the uncoated portion 73 of the second electrode exposed through the outer circumference of the electrode assembly 71.

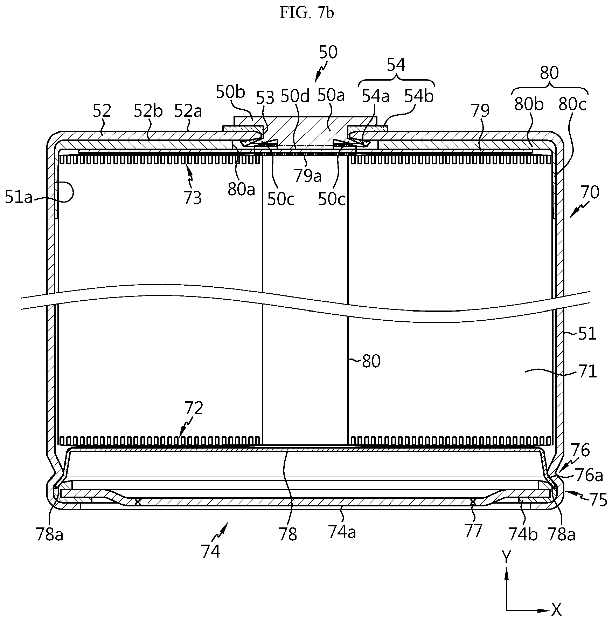

Preferably, the inner surface 52b of the insulator 80 and the bottom 52 of the battery housing 51 may be in close contact with each other as shown in FIG. 7b. Here, 'close contact' means that there is no space (gap) that is visually confirmed. In order to eliminate the space (gap), the distance from the inner surface 52b of the bottom 52 of the battery housing 51 to the flat portion 50d of the electrode terminal 50 may be equal to or slightly smaller than the thickness of the insulator 80.

Preferably, the uncoated portions 72, 73 of the first electrode and/or the second electrode may be bent in a radial direction, for example from the outer circumference of the electrode assembly 71 to the core, to form bent surfaces at the upper and lower portions of the electrode assembly 71. In addition, the first current collector 78 may be welded to the bent surface formed by bending the uncoated portion 72 of the first electrode, and the second current collector 79 may be welded to the bent surface formed by bending the uncoated portion 73 of the second electrode.

In order to relieve the stress generated when the uncoated portions 72, 73 are bent, the first electrode and/or the second electrode may have an improved structure different from that of the conventional electrode (see FIG. 1).

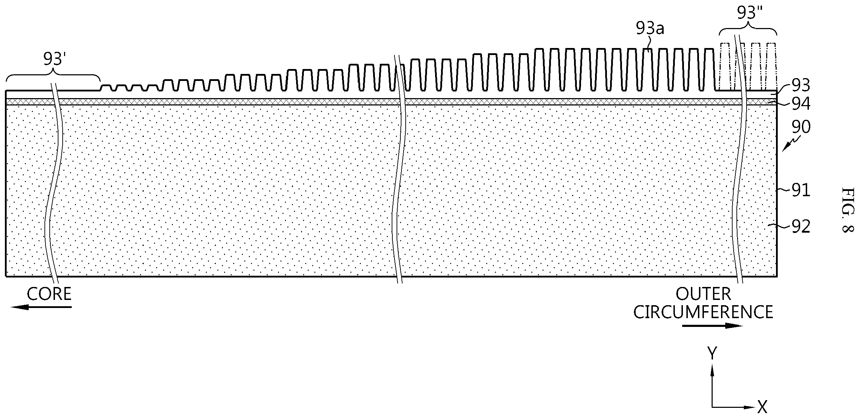

FIG. 8 is a plan view exemplarily showing a structure of an electrode 90 according to a preferred embodiment of the present disclosure.

Referring to FIG. 8, the electrode 90 has a sheet-shaped current collector 91 made of a conductive material foil, an active material layer 92 formed on at least one surface of the current collector 91, and an uncoated portion 93 formed at a long side end of the current collector 91 and not coated with an active material.

Preferably, the uncoated portion 93 may include a plurality of notched segments 93a. The plurality of segments 93a constitute a plurality of groups, and the segments 93a included in each group may have the same height (length in the Y direction) and/or the same width (length in the X direction) and/or the same separation pitch. The number of segments 93a belonging to each group may be increased or decreased than shown. The segment 93a has a shape of a geometric figure in which at least one linear line and/or at least one curve are combined. Preferably, the segment 93a may have a trapezoidal shape, which may be changed into a rectangular, parallelogram, semicircular, semi-elliptical shape, or the like as desired.

Preferably, the height of the segment 93a may be increased stepwise along one direction parallel to the winding direction of the electrode assembly, for example from the core to the outer circumference. In addition, a core-side uncoated portion 93' adjacent to the core may not include the segment 93a, and the height of the core-side uncoated portion 93' may be smaller than that of other uncoated portion regions. Also, an outer circumferential uncoated portion 93" adjacent to the outer circumferential may not include the segment 93a, and the height of the outer circumferential uncoated portion 93" may be smaller than that of other uncoated portion regions.

Optionally, the electrode 90 may include an insulating coating layer 94 for covering the boundary between the active material layer 92 and the uncoated portion 93. The insulating coating layer 94 includes an insulating polymer resin, and may optionally include an inorganic filler further. The insulating coating layer 94 prevents the end of the active material layer 92 from coming into contact with the opposite-polarity active material layer opposite thereto through the separator, and serves to structurally support the bending of the segment 93a. To this end, when the electrode 90 is wound into an electrode assembly, it is preferable that the insulating coating layer 94 is at least partially exposed from the separator to the outside.

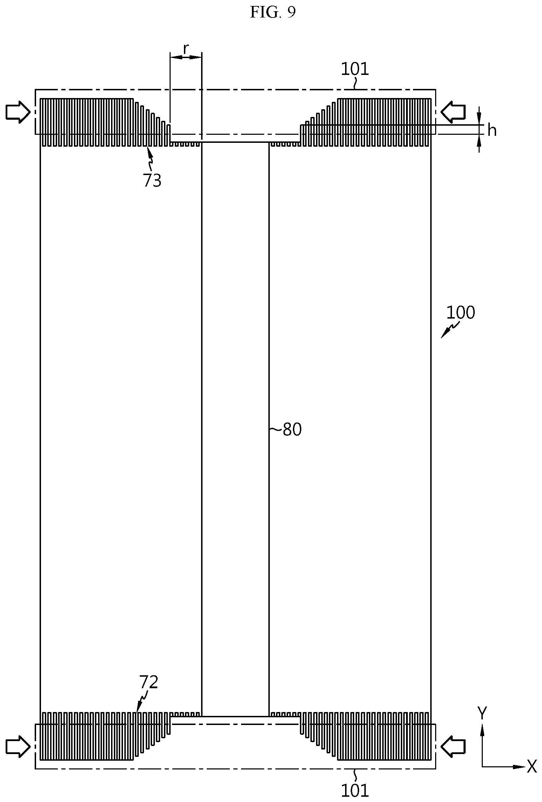

FIG. 9 is a sectional view showing an electrode assembly 100 in which a segment structure of an uncoated portion of the electrode 90 according to an embodiment of the present disclosure is applied to the first electrode and the second electrode, taken along the longitudinal direction (Y).

Referring to FIG. 9, the electrode assembly 100 may be manufactured by the winding method described with reference to FIG. 2. For convenience of explanation, the protruding structure of the uncoated portions 72, 73 extending out of the separator is illustrated in detail, and the winding structure of the first electrode, the second electrode and the separator is not illustrated in detail. The uncoated portion 72 protruding downward extends from the first electrode, and the uncoated portion 73 protruding upward extends from the second electrode.

The pattern in which the heights of the uncoated portions 72, 73 change is schematically shown. That is, the heights of the uncoated portions 72, 73 may vary irregularly depending on the position at which the cross-section is cut. For example, when the side portion of the trapezoidal segment 93a is cut, the height of the uncoated portion at the cross section is lower than the height of the segment 93a. Accordingly, it should be understood that the heights of the uncoated portions 72, 73 depicted in the drawing showing the cross-section of the electrode assembly 100 correspond to the average of the heights of the uncoated portions included in each winding turn.

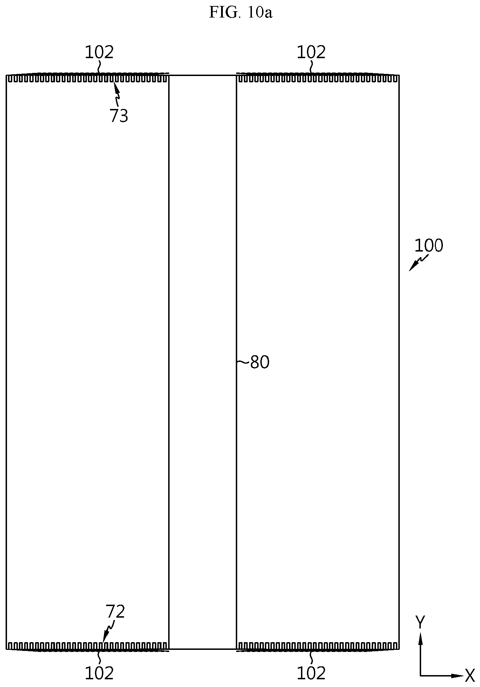

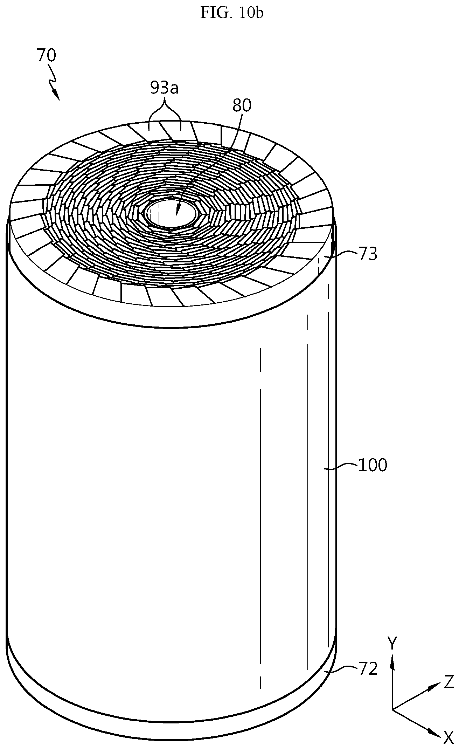

The uncoated portions 72, 73 may be bent along the radial direction of the electrode assembly 100, for example from the outer circumference to the core, as shown in FIGS. 10a and 10b. In FIG. 9, the bent portion 101 is indicated by a dotted line box. When the uncoated portions 72, 73 are bent, bent surfaces 102 are formed at the upper and lower portions of the electrode assembly 100 as the segments adjacent to each other in a radius direction overlap each other in multiple layers. At this time, the core-side uncoated portion 93' (see FIG. 8) is not bent due to its low height, and the height (h) of the segment bent at the innermost side is less than or equal to the radius-direction length (r) of the winding region formed by the core-side uncoated portion 93' with no segment structure. Therefore, the cavity 80 in the core of the electrode assembly 100 is not closed by the bent segments. If the cavity 80 is not closed, there is no difficulty in the electrolyte injection process, and the electrolyte injection efficiency is improved. In addition, the electrode terminal 50 and the second current collector 79 may be easily welded by inserting a welding tool through the cavity 80.

In the cylindrical battery 70 according to the embodiment of the present disclosure, the cap 74a of the sealing body 74 has no polarity. Instead, the first current collector 78 is connected to the sidewall of the battery housing 51, so that the outer surface 52a of the bottom 52 of the battery housing 51 has polarity opposite to the electrode terminal 50. Therefore, when a plurality of batteries are to be connected in series and/or in parallel, wiring such as bus bar connection may be performed at the upper portion of the cylindrical battery 70 using the electrode terminal 50 and the outer surface 52a of the bottom 52 of the battery housing 51. Through this, the energy density may be improved by increasing the number of batteries that can be mounted in the same space, and the electric wiring work may be performed easily.

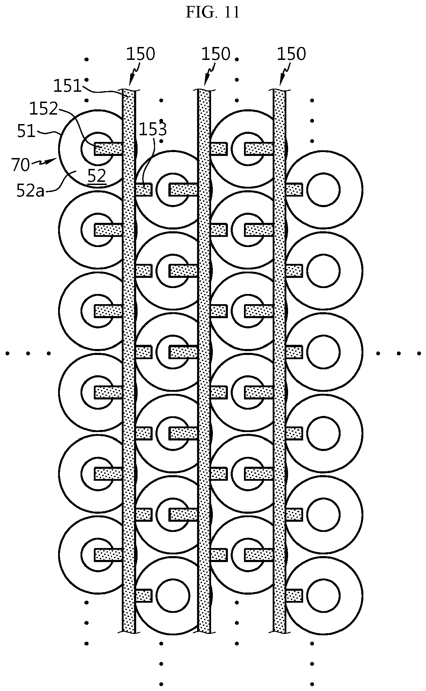

FIG. 11 is a diagram showing a state in which the cylindrical batteries 70 according to an embodiment of the present disclosure are electrically connected using a bus bar 150.

Referring to FIG. 11, the plurality of cylindrical batteries 70 may be connected in series and in parallel at an upper portion using the bus bar 150. The number of cylindrical batteries 70 may be increased or decreased in consideration of the capacity of the battery pack.

In each cylindrical battery 70, the electrode terminal 50 may have a positive polarity, and the outer surface 52a of the bottom 52 of the battery housing 51 may have a negative polarity, and vice versa.

Preferably, the plurality of cylindrical batteries 70 may be arranged in a plurality of columns and rows. Columns are provided in an upper and lower direction with respect to the ground, and rows are provided in a left and right direction with respect to the drawings. Also, in order to maximize space efficiency, the cylindrical batteries 70 may be arranged in a closest packing structure. The closest packing structure is formed when the centers of the electrode terminals 50 form an equilateral triangle when being connected to each other.

Preferably, the bus bar 150 may be disposed above the plurality of batteries, more preferably between adjacent columns. Alternatively, the bus bar 150 may be disposed between adjacent rows.

Preferably, the bus bar 150 connects cells arranged in the same column in parallel to each other, and serially connects cells arranged in two adjacent columns to each other.

Preferably, for serial and parallel connection, the bus bar 150 may include a body portion 151, a plurality of first bus bar terminals 152 and a plurality of second bus bar terminals 153.

The body portion 151 may extend between electrode terminals (50) of adjacent cylindrical batteries 70, preferably between columns of the cylindrical batteries 70. Alternatively, the body portion 151 may extend along a column of cylindrical batteries 70, and the body portion 151 may be regularly bent like a zigzag shape.

The plurality of first bus bar terminals 152 may protrude from one side of the body portion 151 toward the electrode terminal 50 of each cylindrical battery 70 and may be electrically coupled to the electrode terminal 50. Electrical coupling with the electrode terminal 50 may be achieved through laser welding, ultrasonic welding, or the like. In addition, the plurality of second bus bar terminals 153 may protrude from the other side of the body portion 151 toward the outer surface 52a of the bottom 52 of the battery housing 51 of each cylindrical battery 70, and may be electrically coupled to the outer surface 52a. Electrical coupling with the outer surface 52a may be performed by laser welding, ultrasonic welding, or the like.

Preferably, the body portion 151, the plurality of first bus bar terminals 152 and the plurality of second bus bar terminals 153 may be made of one conductive metal plate. The metal plate may be an aluminum plate or a copper plate, but the present disclosure is not limited thereto. In a modified example, the body portion 151, the plurality of first bus bar terminals 152 and the plurality of second bus bar terminals 153 may be manufactured as separate pieces and then coupled to each other through welding or the like.

In the cylindrical battery 70 according to the present disclosure, the electrode terminal 50 having a positive polarity and the outer surface 52a of the bottom 52 of the battery housing 51 having a negative polarity are located in the same direction, and thus the cylindrical batteries 70 may be electrically connected easily using the bus bar 150.

In addition, since the electrode terminal 50 and the outer surface 52a of the cylindrical battery 70 have a large area, the coupling area of the bus bar 150 may be sufficiently secured to sufficiently reduce the resistance of the battery pack including the cylindrical battery 70.

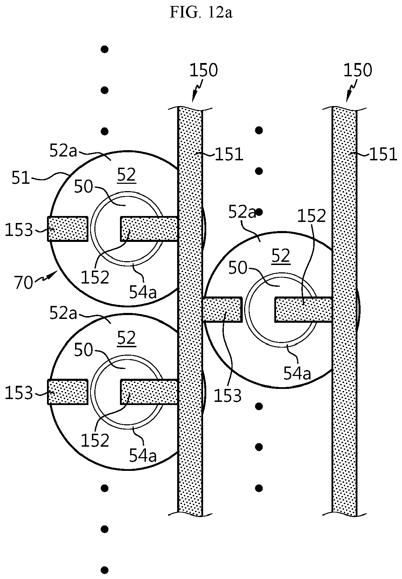

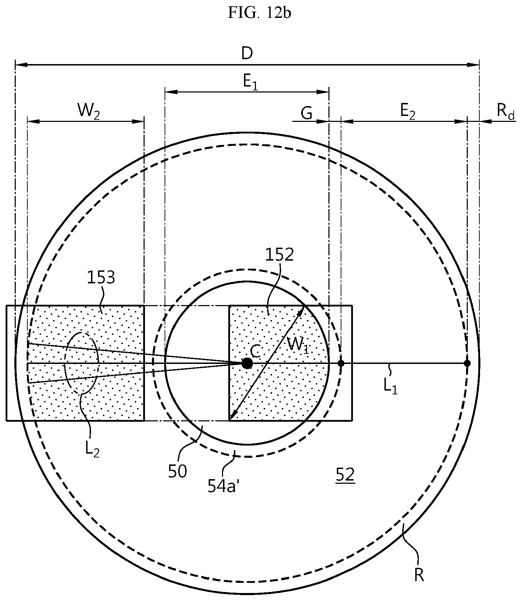

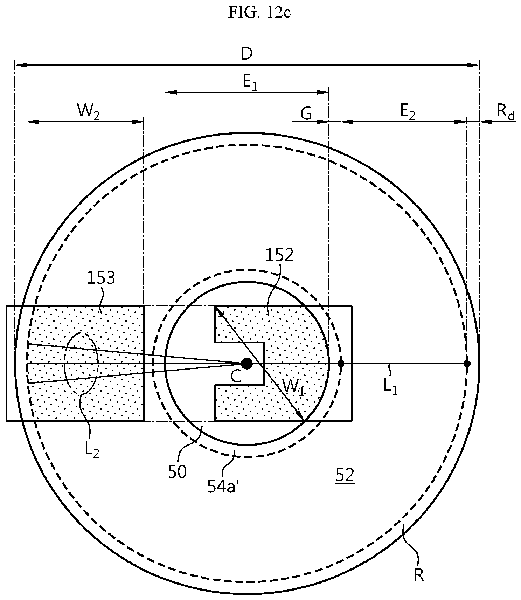

FIG. 12a is a partially enlarged view showing an electrical connection portion between the bus bar 150 and the cylindrical battery 70, and FIGS. 12b and 12c are diagrams showing the definition of various parameters to design upper and lower limits of the diameter of the electrode terminal 50 and the exposure width of the outer surface 52a in consideration of the sizes of the bus bar terminals 152, 153.

Referring to FIGS. 12a, 12b and 12c, in the cylindrical battery 70, the diameter ($E_1$) of the electrode terminal 50 and the width ($E_2$) of the ring-shaped outer surface 52a may be adaptively adjusted in consideration of the dimensions of the contact areas of the bus bar terminals 152, 153.

Here, the width E2 of the outer surface 52a is the width of the exposed surface parallel to the surface of the electrode terminal 50. Specifically, the width E2 of the outer surface 52a is defined as the width of a line segment connecting two points where a linear line ($L_1$) drawn in a radial direction from the center C of the electrode terminal 50 intersects inner and outer boundaries of the outer surface 52a. The width E2 of the outer surface 52a is the width of the flat exposed surface excluding the round region existing at the edge of the bottom 52 and the exposed area 54a' of the outer gasket 54a.

The outer surface of the bottom 52 of the battery housing 51 may be divided into the electrode terminal 50, the exposed area 54a' of the terminal gasket 54, and the round region R at the edge of the outer surface 52a when viewed from the top. The round region R is a processing region (see FIGS. 7a and 7b) for smoothly connecting the bottom 52 of the battery housing 51 and the sidewall of the battery housing 51, and has a width ($R_d$) on a plane.

The first bus bar terminal 152 of the bus bar 150 is branched to one side different from the traveling direction of the body portion 151, and is electrically coupled to the electrode terminal 50. At this time, the electrode terminal 50 and the first bus bar terminal 152 form a first overlapping region (hatched in the drawing) on a plane, and the first overlapping region has a first width ($W_1$). Here, the first overlapping region is a region where the electrode terminal 50 and the first bus bar terminal 152 overlap on a plane.

The first width ($W_1$) is defined as a maximum value among distances between any two points selected in the edge of the first overlapping region. The definition of the first width ($W_1$) is applied identically when the first overlapping region includes the center of the electrode terminal 50 (FIG. 12b) and when the first overlapping region does not include the center of the electrode terminal 50 (FIG. 12c). Referring to FIGS. 12b and 12c, the distance represented by $W_1$ corresponds to a maximum value among distances between any two points selected in the edge of the first overlapping region.

The second bus bar terminal 153 of the bus bar 150 extends in a direction opposite to the first bus bar terminal 152 based on the traveling direction of the body portion 151, and is electrically coupled to the outer surface 52a of the bottom 52 of the battery housing 51. At this time, the second bus bar terminal 153 and the outer surface 52a form a second overlapping region (hatched on the figure) on a plane, and the second overlapping region has a second width ($W_2$). Here, the second overlapping region is a region where the outer surface 52a and the second bus bar terminal 153 overlap on a plane.

The second width ($W_2$) is defined as a maximum value among widths between two points where each linear line and the edge of the second overlapping region meet when a plurality of linear lines ($L_3$) are drawn from the center C of the electrode terminal 50 to pass through the second overlapping region.

Preferably, the diameter ($E_1$) of the electrode terminal 50 must be at least equal to or greater than the first width ($W_1$) of the first bus bar terminal 152. This is because the first overlapping region of the first bus bar terminal 152 and the electrode terminal 50 must not deviate out of the electrode terminal 50 on the plane. Also, the diameter ($E_1$) of the electrode terminal 50 may be increased to the maximum until the distance between the boundary of the electrode terminal 50 and the second bus bar terminal 153 corresponds to the width (G) of the exposed area 54a' of the outer gasket 54a. Therefore, the maximum value of the diameter ($E_1$) of the electrode terminal 50 is 'D-2*$R_d$-2*G-2*$W_2$'.

Preferably, the width ($E_2$) of the outer surface 52a is a factor dependent on the diameter ($E_1$) of the electrode terminal 50, and must be at least equal to or greater than the second width ($W_2$) of the second bus bar terminal 153. Only in this case, an overlapping region of the second bus bar terminal 153 and the outer surface 52a may be formed. In addition, the width ($E_2$) of the outer surface 52a may be increased to the maximum up to 50% of 'D-2*$R_d$-2*G-$E_1$', which is a value obtained by subtracting the diameter ($E_1$) of the electrode terminal 50, the width (2*G) of the exposed area of the outer gasket 54a, and the width (2*$R_d$) of the round region from the outer diameter (D) of the battery housing 51.

In conclusion, in the cylindrical battery 70 according to the present disclosure, it is preferable that the diameter ($E_1$) of the electrode terminal 50 and the width ($E_2$) of the outer surface 52a are designed to satisfy the following relational expression.

$$W_1 \le E_1 \le D-2R_d-2G-2W_2$$

$$E_2 = 0.5*(D-2R_d-2G-E_1)$$

($E_1$: diameter of the electrode terminal 50, $E_2$: width of the outer surface 52a, D: outer diameter of the battery housing 51, $R_d$: width of the round region R measured on a plane, G: width of the exposed area 54a' of the outer gasket 54a, $W_1$: width of the first bus bar terminal 152, $W_2$: width of the second bus bar terminal 153)

In a specific example, when D is 46 mm, $W_1$ and $W_2$ are 6 mm, G is 0.5 mm, and R is 1 mm, the diameter ($E_1$) of the electrode terminal 50 is 6 mm to 31 mm, and the width ($E_2$) of the outer surface 52a is 6 mm to 18.5 mm.

As another example, when D is 46 mm, $W_1$ and $W_2$ are 6 mm, G is 0.5 mm and $R_d$ is 1.5 mm, the diameter ($E_1$) of the electrode terminal 50 is 6 mm to 30 mm and the width ($E_2$) of the outer surface 52a is 6 mm to 18 mm.

As described above, the cylindrical battery 70 of the present disclosure has a structure in which resistance is minimized by expanding a welding area through a bent surface of the uncoated portion, multiplexing a current path by using a first current collector, minimizing a current path length, and the like. The AC resistance of the cylindrical battery 70 measured using a resistance measuring instrument between the electrode terminal 50 (positive-polarity terminal) and the outer surface 52a (negative-polarity terminal) near the electrode terminal 50 may be about 0.5 milliohms (mohm) to 4 milliohms (mohm), preferably 1 milliohms (mohm) to 4 milliohms (mohm), which is appropriate to quick charging.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula $A[A_xM_y]O_{2+z}$ (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; $x \ge 0$, $1 \le x+y \le 2$, $-0.1 \le z < 2$; and the stoichiometric coefficients x, y and z are selected so that the compound maintains electrical neutrality).

In another example, the positive electrode active material may be an alkali metal compound $xLiM^1O_2-(1-x)Li_2M^2O_3$ disclosed in US6,677,082, US6,680,143, et al., wherein $M^1$ includes at least one element having an average oxidation state 3; $M^2$ includes at least one element having an average oxidation state 4; and $0 \le x \le 1$).

In still another example, the positive electrode active material may be lithium metal phosphate expressed by a general formula $Li_aM^1_xFe_{1-x}M^2_yP_{1-y}M^3_zO_{4-z}$ ($M^1$ includes at least one element selected from the Ti, Si, Mn, Co, Fe, V, Cr, Mo, Ni, Nd, Mg and Al; $M^2$ includes at least one element selected from Ti, Si, Mn, Co, Fe, Cr, Mo, Ni, Nd, Al, Mg, Al, As, Sb, Si, Ge, V and S; $M^3$ includes a halogen element optionally including F; $0 < a \le 2$, $0 \le x \le 1$, $0 \le y < 1$, $0 \le z < 1$; the stoichiometric coefficients a, x, y and z are selected so that the compound maintains electrical neutrality), or $Li_3M_2(PO_4)_3$ (M includes at least one element selected from Ti, Si, Mn, Fe, Co, V, Cr, Mo, Ni, Mg and Al).

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as $TiO_z$ and $SnO_z$ with a potential of less than 2V may also be used as the negative electrode active material. As the carbon material, low-crystalline carbon and/or high-crystalline carbon may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT), $BaTiO_3$, hafnia ($HfO_2$), $SrTiO_3$, TiOz, $Al_2O_3$, ZrOz, SnOz, CeOz, MgO, CaO, ZnO and $Y_2O_3$.

The electrolyte may be a salt having a structure like $A^+B^-$. Here, $A^+$ includes an alkali metal cation such as $Li^+$, $Na^+$, or $K^+$, or a combination thereof, and $B^-$ includes at least one anion selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N$; $CF_3CF_2(CF_3)_2CO^-$, $(CF_3SO_2)_2CH^-$, $(SF_5)3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or a mixture thereof.

The cylindrical battery 70 according to the above embodiment may be used to manufacture a battery pack.

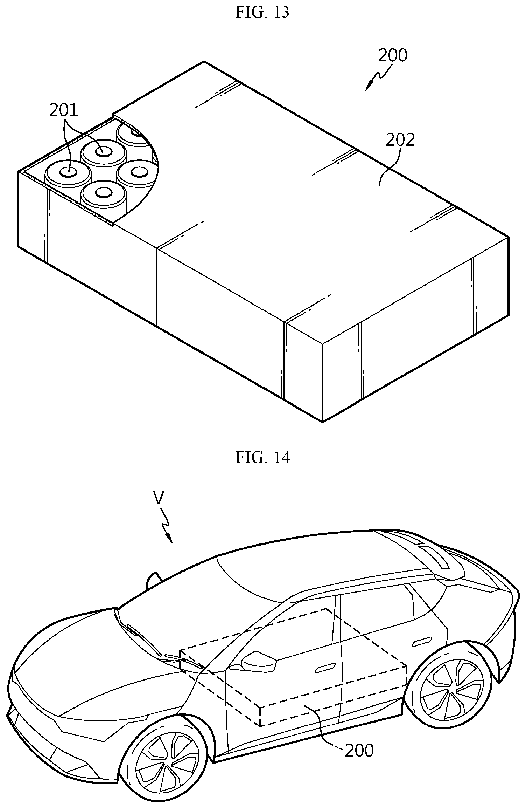

FIG. 13 is a diagram schematically showing a battery pack according to an embodiment of the present disclosure.

Referring to FIG. 13, a battery pack 200 according to an embodiment of the present disclosure includes an aggregate in which cylindrical batteries 201 are electrically connected, and a pack housing 202 for accommodating the aggregate. The cylindrical battery 201 is the battery according to the above embodiment. In the drawing, components such as a bus bar, a cooling unit, and an external terminal for electrical connection of the cylindrical batteries 201 are not depicted for convenience of illustration.

The battery pack 200 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 14 is a diagram for illustrating a vehicle including the battery pack 200 of FIG. 13.

Referring to FIG. 14, a vehicle V according to an embodiment of the present disclosure includes the battery pack 200 according to an embodiment of the present disclosure. The vehicle V operates by receiving power from the battery pack 200 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A fixing structure of an electrode terminal, comprising:

   a battery housing configured to be opened at one side and have a bottom at the other side in which a perforation hole is formed;
   an electrode terminal installed through the perforation hole not to contact an inner wall of the perforation hole; and
   a terminal gasket interposed between the electrode terminal and the perforation hole,
   wherein the electrode terminal includes:

   a body portion inserted into the perforation hole;
   an outer flange portion configured to extend along an outer surface of the bottom of the battery housing from a first side of the body portion;
   an inner flange portion configured to extend toward an inner surface of the bottom of the battery housing from a second side of the body portion to compress the terminal gasket; and
   a flat portion provided to an inner side of the inner flange portion.

2. The fixing structure of an electrode terminal according to claim 1,
   wherein the flat portion is parallel with the inner surface of the bottom of the battery housing.

3. The fixing structure of an electrode terminal according to claim 1,
wherein the electrode terminal is made of metal, and the inner flange portion is formed by plastically processing the second side of the body portion.

4. The fixing structure of an electrode terminal according to claim 1,
wherein the electrode terminal is a rivet terminal riveted through the perforation hole by the inner flange portion.

5. The fixing structure of an electrode terminal according to claim 1,
wherein an angle between a surface of the inner flange portion facing the bottom of the battery housing and the inner surface of the bottom of the battery housing is 0° to 60°.

6. The fixing structure of an electrode terminal according to claim 1,
wherein the inner flange portion includes a first region gradually spaced away from the bottom of the battery housing and a second region connected to the first region and extending toward the bottom of the battery housing, and an angle between a surface of the second region facing the bottom and the inner surface of the bottom is 0° to 30°.

7. The fixing structure of an electrode terminal according to claim 1,
wherein a recess is provided between the inner flange portion and the flat portion.

8. The fixing structure of an electrode terminal according to claim 7,
wherein the recess is a groove having a closed loop shape recessed toward a central axis of the body portion.

9. The fixing structure of an electrode terminal according to claim 7,
wherein the recess has an asymmetric cross section.

10. The fixing structure of an electrode terminal according to claim 9,
wherein the asymmetric cross section includes a sidewall of the flat portion and an inclined surface of the inner flange portion connected to an end of the sidewall of the flat portion.

11. The fixing structure of an electrode terminal according to claim 10,
wherein the sidewall is perpendicular to the inner surface of the bottom of the battery housing.

12. The fixing structure of an electrode terminal according to claim 10,
wherein the sidewall is inclined toward the flat portion.

13. The fixing structure of an electrode terminal according to claim 1,
wherein the inner flange portion has a thickness gradually decreasing as being farther away from the body portion.

14. The fixing structure of an electrode terminal according to claim 1,
wherein the terminal gasket includes:

an outer gasket interposed between the outer flange portion and a first plane where the outer surface of the bottom of the battery housing is located;
an inner gasket interposed between the inner flange portion and a second plane where the inner surface of the bottom of the battery housing is located; and
an intermediate gasket interposed between the body portion and the perforation hole to connect the outer gasket and the inner gasket.

15. The fixing structure of an electrode terminal according to claim 14,
wherein the intermediate gasket has different thicknesses depending on locations thereof.

16. The fixing structure of an electrode terminal according to claim 15,
wherein the terminal gasket has a minimum thickness in the intermediate gasket.

17. The fixing structure of an electrode terminal according to claim 15,
wherein a region of the intermediate gasket adjacent to the first plane has a thickness increasing as being closer to the first plane.

18. The fixing structure of an electrode terminal according to claim 15,
wherein a region of the intermediate gasket adjacent to the second plane has a thickness increasing as being closer to the second plane.

19. The fixing structure of an electrode terminal according to claim 15,
wherein a central region located between the first plane and the second plane of the intermediate gasket has a uniform thickness.

20. The fixing structure of an electrode terminal according to claim 14,
wherein a region of the intermediate gasket interposed between an inner edge of the perforation hole connected to the inner surface of the bottom and the inner flange portion has a relatively smaller thickness than the other region of the intermediate gasket.

21. The fixing structure of an electrode terminal according to claim 14,
wherein the intermediate gasket has a thickness gradually decreasing as being farther away from the outer flange portion.

22. The fixing structure of an electrode terminal according to claim 15,
wherein a region of the inner gasket interposed between the inner surface of the bottom and a region near an end of the inner flange portion has a smallest thickness.

23. The fixing structure of an electrode terminal according to claim 14,
wherein the inner edge of the perforation hole includes a facing surface that faces the inner flange portion.

24. The fixing structure of an electrode terminal according to claim 14,
wherein the inner gasket is configured to extend longer than the inner flange portion so that an end thereof is exposed.

25. The fixing structure of an electrode terminal according to claim 14,
wherein a height of the flat portion is equal to or larger than a height of an end of the inner gasket based on the inner surface of the bottom of the battery housing.

26. The fixing structure of an electrode terminal according to claim 1,
wherein a height of the flat portion is equal to or larger than a height of the inner flange portion based on the inner surface of the bottom of the battery housing.

27. The fixing structure of an electrode terminal according to claim 14,
wherein a height of the inner flange portion is larger than a height of an end of the inner gasket based on the inner surface of the bottom of the battery housing.

28. The fixing structure of an electrode terminal according to claim 1,
wherein a height of the inner flange portion is 0.5 mm to 3.0 mm based on the inner surface of the bottom of the battery housing.

29. The fixing structure of an electrode terminal according to claim 28,
wherein a height of the electrode terminal from a lower surface of the outer flange portion to a surface of the flat portion is 4 mm to 7 mm.

30. The fixing structure of an electrode terminal according to claim 1,
wherein a height of the outer flange portion is 0.8 mm or more based on the outer surface of the bottom of the battery housing.

31. The fixing structure of an electrode terminal according to claim 14,

wherein at least a portion of the outer gasket is exposed to the outside of the outer flange portion, and
the exposed portion of the outer gasket, when measured in a direction parallel to the outer surface of the bottom of the battery housing, has a width of 0.1 mm to 1 mm.

32. The fixing structure of an electrode terminal according to claim 14,
wherein a radius from a center of the body portion to an edge of the outer flange portion is 10% to 70% of a radius of the bottom of the battery housing.

33. The fixing structure of an electrode terminal according to claim 1,
wherein a radius from a center of the body portion to an edge of the flat portion is 4% to 30% of a radius of the bottom of the battery housing.

34. The fixing structure of an electrode terminal according to claim 14,
wherein when a ratio of a thickness change at a maximum compression point compared to a thickness of the terminal gasket before compression is defined as a compression ratio, the compression ratio of the terminal gasket is 30% to 90%.

35. The fixing structure of an electrode terminal according to claim 34,

wherein the terminal gasket includes polybutylene terephthalate, polyethylene fluoride, or polypropylene, and
the compression ratio of the terminal gasket is 50% to 90%.

36. The fixing structure of an electrode terminal according to claim 34,
wherein the intermediate gasket and the inner gasket of the terminal gasket has substantially the same thickness before compression, and the compression ratio of the intermediate gasket and the inner gasket is 50% to 90%.

37. A battery, comprising:

an electrode assembly in which a first electrode and a second electrode are wound with a separator interposed therebetween, the electrode assembly having a first portion of the first electrode and a second portion of the second electrode configured to extend from both ends thereof and exposed to the outside of the separator;

a battery housing configured to accommodate the electrode assembly and electrically connected to the first electrode;

an electrode terminal installed through a perforation hole formed in a bottom of the battery housing not to contact an inner wall of the perforation hole and electrically connected to the second electrode;

the electrode terminal including:

a body portion inserted into the perforation hole;

an outer flange portion configured to extend along an outer surface of the bottom of the battery housing from a first side of the body portion;

an inner flange portion configured to extend toward an inner surface of the bottom of the battery housing from a second side of the body portion; and

a flat portion provided to an inner side of the inner flange portion,

a terminal gasket interposed between the electrode terminal and the perforation hole; and

a sealing body configured to seal an open end of the battery housing so as to be insulated from the battery housing.

38. The battery according to claim 37,

wherein the battery housing includes a beading portion formed in a region adjacent to the open end and pressed-in into the battery housing, and the sealing body includes a cap having no polarity and a sealing gasket interposed between an edge of the cap and the open end of the battery housing.

39. The battery according to claim 38,
wherein the battery housing further includes a crimping portion extended and bent into the inside of the battery housing and configured to surround and fix the edge of the cap together with the sealing gasket.

40. The battery according to claim 38,
wherein the cap includes a vent notch that ruptures when a pressure inside the battery housing exceeds a threshold.

41. The battery according to claim 40,
wherein the vent notch is ruptured when the pressure inside the battery housing is in the range of 15 kgf/cm$^2$ to 35 kgf/cm$^2$.

42. The battery according to claim 38, further comprising:

a first current collector coupled to the first portion of the first electrode,

wherein at least a part of an edge of the first current collector not in contact with the first portion of the first electrode is interposed between the beading portion and the sealing gasket and fixed by the crimping portion.

43. The battery according to claim 42,
wherein at least a part of the edge of the first current collector is fixed to an inner circumference of the beading portion adjacent to the crimping portion by welding.

44. The battery according to claim 37, further comprising:

a second current collector coupled to the second portion of the second electrode,

wherein at least a part of the second current collector is coupled to the flat portion of the electrode terminal.

45. The battery according to claim 44,

wherein the second current collector and the flat portion of the electrode terminal are coupled through welding, and

a tensile force of the welding portion between the second current collector and the flat portion of the electrode terminal is 2 kgf or above.

46. The battery according to claim 45,
wherein a converted diameter of the welding pattern exposed on a surface of the second current collector is 2 mm or more.

47. The battery according to claim 46,
wherein a diameter of the flat portion of the electrode terminal is 3 mm to 14 mm.

48. The battery according to claim 45,
wherein a ratio of an area of the welding pattern exposed on a surface of the second current collector to an area of the flat portion of the electrode terminal is 2.04% to 44.4%.

49. The battery according to claim 44, further comprising:
an insulator interposed between the second current collector and an inner circumference of the bottom of the battery housing and between an inner circumference of a sidewall of the battery housing and the electrode assembly.

**50.** The battery according to claim 49,
wherein the insulator has a welding hole formed to expose the flat portion of the electrode terminal toward the second current collector and covers a surface of the second current collector and an edge of one side of the electrode assembly.

**51.** The battery according to claim 50,
wherein a height from the inner surface of the bottom of the battery housing to the flat portion of the electrode terminal is equal to or smaller than a thickness of the insulator.

**52.** The battery according to claim 50,
wherein the terminal gasket includes:

an outer gasket interposed between the outer flange portion and a first plane where the outer surface of the bottom of the battery housing is located;
an inner gasket interposed between the inner flange portion and a second plane where the inner surface of the bottom of the battery housing is located; and
an intermediate gasket interposed between the body portion and the perforation hole to connect the outer gasket and the inner gasket.

**53.** The battery according to claim 52,
wherein an end of the inner gasket is exposed to the outside of the inner flange portion.

**54.** The battery according to claim 52,
wherein the welding hole exposes the flat portion of the electrode terminal and the inner flange portion.

**55.** The battery according to claim 53,
wherein the welding hole exposes the flat portion of the electrode terminal, the inner flange portion and the inner gasket.

**56.** The battery according to claim 37,
wherein a first bus bar terminal is electrically coupled to a surface of the electrode terminal, and a second bus bar terminal is electrically coupled to the outer surface of the bottom of the battery housing.

**57.** The battery according to claim 56,

wherein the first bus bar terminal overlaps with the electrode terminal on a plane to form a first overlapping region, and the second bus bar terminal overlaps with the outer surface of the bottom of the battery housing to form a second overlapping region, and
a diameter of the electrode terminal and a width of the outer surface of the bottom of the battery housing satisfy the following relational expression,

$$W_1 \leq E_1 \leq D - 2R_d - 2G - 2W_2$$

$$E_2 = 0.5 * (D - 2R_d - 2G - E_1)$$

($E_1$: diameter of the electrode terminal, $E_2$: width of an exposed surface parallel to a surface of the electrode terminal in the outer surface of the bottom of the battery housing, D: outer diameter of the battery housing, $R_d$: width of a round region at an edge of the battery housing measured on a plane, G: exposure width of the outer gasket through an edge of the electrode terminal, $W_1$: maximum value among distances between any two points selected in an edge of the first overlapping region, $W_2$: maximum value among distances between two points where a plurality of linear lines passing through the center of the electrode terminal meet an edge of the second overlapping region).

**58.** The battery according to claim 37,
wherein a form factor ratio obtained by dividing a diameter of the battery by height is greater than 0.4.

**59.** A battery pack, comprising a plurality of batteries according to any one of claims 37 to 58.

**60.** The battery pack according to claim 59,

wherein the plurality of batteries are arranged in a predetermined number of columns, and
the electrode terminal and the outer surface of the bottom of the battery housing of each of the plurality of batteries are disposed to face upward.

**61.** The battery pack according to claim 60, further comprising:

a plurality of bus bars configured to connect the plurality of batteries in series and in parallel,
wherein the plurality of bus bars are disposed above the plurality of batteries,
wherein each bus bar includes:

a body portion configured to extend between electrode terminals of adjacent batteries;
a plurality of first bus bar terminals respectively configured to extend in one side direction from the body portion and electrically coupled to the electrode terminal of the battery located in the one side direction; and
a plurality of second bus bar terminals respectively configured to extend in the other side direction from the body portion and electrically coupled to the outer surface of the bottom of the battery housing of the battery located in the other side direction.

62. The battery pack according to claim 59, wherein an AC resistance of the battery measured between the electrode terminal and the outer surface of the bottom of the battery housing is 4 milliohms (mohm) or less.

63. A vehicle, comprising at least one battery pack according to any one of claims 59 to 62.

64. An electrode terminal, comprising:

a body portion including an upper surface, a lower surface and an outer surface;
an outer flange portion configured to extend along an outer surface of a bottom of a battery housing from the outer surface of the body portion; and
an inner flange portion configured to extend toward an inner surface of the bottom of the battery housing from the outer surface of the body portion,
wherein the upper surface of the body portion is connectable to a current collector.

65. The electrode terminal according to claim 64, wherein the upper surface of the body portion is located above the inner flange portion.

66. The electrode terminal according to claim 64, wherein the upper surface of the body portion is flat.

67. The electrode terminal according to claim 64, wherein a groove is provided between the body portion and the inner flange portion.

68. The electrode terminal according to claim 64, wherein the groove includes a first surface formed by the outer surface of the body portion and a second surface formed by the upper surface of the inner flange portion.

69. The electrode terminal according to claim 68, wherein the first surface and the second surface are asymmetric.

70. The electrode terminal according to claim 64, wherein an angle between the inner flange portion and the outer flange portion is 0° to 60°.

FIG. 1

FIG. 2

FIG. 3

FIG. 4

FIG. 5

FIG. 6a

FIG. 6b

FIG. 6c

FIG. 7a

FIG. 7b

EP 4 239 784 A2

FIG. 8

93'

93"

93a

93

94

90

91

92

CORE

OUTER
CIRCUMFERENCE

Y

X

FIG. 9

FIG. 10a

FIG. 10b

FIG. 11

FIG. 12a

FIG. 12b

FIG. 12c

FIG. 13

FIG. 14

REFERENCES CITED IN THE DESCRIPTION

**Patent documents cited in the description**

- KR 1020210007278
- KR 1020210022897
- KR 1020210022894
- KR 1020210022891
- KR 1020210022881
- KR 1020210024424
- KR 1020210030300
- KR 1020210030291
- KR 1020210046798
- KR 1020210058183
- KR 1020210077046
- KR 1020210084326
- KR 1020210131225
- KR 1020210131215
- KR 1020210131205
- KR 1020210131208
- KR 1020210131207
- KR 1020210137001
- KR 1020210137856
- KR 1020210142196
- KR 1020210153472
- KR 1020210160823
- KR 1020210163809
- KR 1020210165866
- KR 1020210172446
- KR 1020210177091
- KR 1020210194593
- KR 1020210194610
- KR 1020210194572
- KR 1020210194612
- KR 1020210194611
- KR 1020220001802
- US 6677082 B
- US 6680143 B